(19) Europäisches Patentamt / European Patent Office / Office européen des brevets

(11) **EP 4 447 337 A1**

(12) **EUROPEAN PATENT APPLICATION**
published in accordance with Art. 153(4) EPC

(43) Date of publication:
**16.10.2024 Bulletin 2024/42**

(21) Application number: **22903622.3**

(22) Date of filing: **09.12.2022**

(51) International Patent Classification (IPC):
*H04B 7/06* (2006.01)

(52) Cooperative Patent Classification (CPC):
**H04B 7/06**

(86) International application number:
**PCT/CN2022/138160**

(87) International publication number:
**WO 2023/104205 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.12.2021 CN 202111505026**

(71) Applicant: **ZTE Corporation**
**Shenzhen, Guangdong 518057 (CN)**

(72) Inventors:
• **LI, Lun**
**Shenzhen, Guangdong 518057 (CN)**

• **XIAO, Huahua**
**Shenzhen, Guangdong 518057 (CN)**
• **WU, Hao**
**Shenzhen, Guangdong 518057 (CN)**
• **LIU, Lei**
**Shenzhen, Guangdong 518057 (CN)**
• **LU, Zhaohua**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **FEEDBACK METHOD, ACQUISITION METHOD, TRAINING METHOD, TERMINAL, BASE STATION, ELECTRONIC DEVICE, AND MEDIUM**

(57) Provided in the present disclosure is a feedback method for channel state information, which method is applied to a terminal. The feedback method comprises: compressing first channel state information with M compression multiples by using an encoder, so as to obtain M groups of second channel state information, wherein M is a positive integer, and M is not less than 2; and feeding back the M groups of second channel state information. Further provided in the present disclosure are an acquisition method for channel state information, a method for joint training of an encoder and a decoder, a terminal, a base station, an electronic device, and a computer-readable medium.

FIG. 1

EP 4 447 337 A1

**Description**

CROSS-REFERENCE TO RELATED APPLICATIONS

The present disclosure claims the priority of Chinese patent application No. CN202111505026.8 titled "FEEDBACK METHOD, ACQUISITION METHOD, TRAINING METHOD, TERMINAL, BASE STATION, ELECTRONIC DEVICE AND MEDIUM" filed with the CNIPA on December 10, 2021, the entire contents of which are incorporated herein by reference.

TECHNICAL FIELD

Embodiments of the present disclosure relate to, but are not limited to, the technical field of communications, and in particular, to a feedback method for channel state information, an acquisition method for channel state information, a method for joint training of an encoder and a decoder, a terminal, a base station, an electronic device, and a computer-readable medium.

BACKGROUND

From long term evolution (LTE) to new radio access technology (NR), the multi-antenna technology has always been one of the important technologies in the communication standards. With the continuously improved standards and indexes of communications, how to acquire more accurate channel state information (CSI) has become a key for improving the performance of the multi-antenna technology.

SUMMARY

Embodiments of the present disclosure provide a feedback method for channel state information, an acquisition method for channel state information, a method for joint training of an encoder and a decoder, a terminal, a base station, an electronic device, and a computer-readable medium.
As a first aspect of the present disclosure, there is provided a feedback method for channel state information applied to a terminal, including: compressing first channel state information with M compression multiples by an encoder, to obtain M groups of second channel state information, where M is a positive integer and not less than 2; and feeding back the M groups of second channel state information.
As a second aspect of the present disclosure, there is provided an acquisition method for channel state information applied to a base station, including: receiving M groups of second channel state information, where each group of the received second channel state information is information obtained by compressing first channel state information with a corresponding multiple by an encoder, where M is a positive integer and not less than 2; and decompressing and combining the respective groups of second channel state information by a decoder to obtain target channel state information, wherein one group of second channel state information with the smallest data amount is decompressed with an expansion multiple greater than other groups of second channel state information, and the target channel state information has the same number of elements as the first channel state information.
As a third aspect of the present disclosure, there is provided a method for joint training of an encoder and a decoder, wherein the encoder is capable of performing compression with N compression multiples, the decoder is capable of performing decompression with N expansion multiples, and values of the N compression multiples are equal to values of the N decompression expansion multiples one by one, and the method includes: training initial parameters of the encoder to obtain final parameters of the encoder; and training initial parameters of the decoder to obtain final parameters of the decoder; wherein a training error in the operation of training initial parameters of the encoder, and a training error in the operation of training initial parameters of the decoder, are each an error function between an input of the encoder and an output of the decoder.
As a fourth aspect of the present disclosure, there is provided a terminal, including: a first storage module having a first executable program stored thereon; and at least one first processor which invokes the first executable program to implement the feedback method provided in the first aspect of the present disclosure.
As a fifth aspect of the present disclosure, there is provided a base station, including a second storage module having a second executable program stored thereon; and at least one second processor which invokes the second executable program to implement the acquisition method provided in the second aspect of the present disclosure.
As a sixth aspect of the present disclosure, there is provided an electronic device, including: a third storage module having a third executable program stored thereon; and at least one third processor which invokes the third executable program to implement the method for joint training provided in the third aspect of the present disclosure.
As a seventh aspect of the present disclosure, there is provided a computer-readable medium having an executable program stored thereon which, when invoked, causes any one of the above methods of the present disclosure to be implemented.

BRIEF DESCRIPTION OF DRAWINGS

FIG. 1 is a flowchart of an implementation of a feedback method for channel state information according to the present disclosure;
FIG. 2 is a schematic structural diagram of an implementation of an encoder;
FIG. 3 is a schematic structural diagram of another implementation of an encoder;
FIG. 4 is a schematic diagram showing a relationship between compression sub-modules of different compression multiples and their respective feedback periods;
FIG. 5 is a flowchart of another implementation of a feedback method for channel state information according to the present disclosure;
FIG. 6 is a flowchart of still another implementation of a feedback method for channel state information according to the present disclosure;
FIG. 7 is a flowchart of an implementation of an acquisition method for channel state information according to the present disclosure;
FIG. 8 is a schematic structural diagram of a decoder;
FIG. 9 is a flowchart of an implementation of operation S220;
FIG. 10 is a flowchart of another implementation of an acquisition method for channel state information according to the present disclosure;
FIG. 11 is a schematic diagram showing correspondence between N compression sub-modules in a compression module and N decompression sub-modules in a decompression sub-module;
FIG. 12 is a flowchart of an implementation of operation S221;
FIG. 13 is a flowchart of yet another implementation of an acquisition method for channel state information according to the present disclosure;
FIG. 14 is a flowchart of an implementation of a method for joint training of an encoder and a decoder; and
FIG. 15 is a schematic diagram showing an error function.

DETAIL DESCRIPTION OF EMBODIMENTS

To make those skilled in the art better understand the technical solutions of the present disclosure, the feedback method for channel state information, the acquisition method for channel state information, the method for joint training of an encoder and a decoder, the terminal, the base station, the electronic device and the computer-readable medium of the present disclosure will be described in detail below with reference to the accompanying drawings.

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

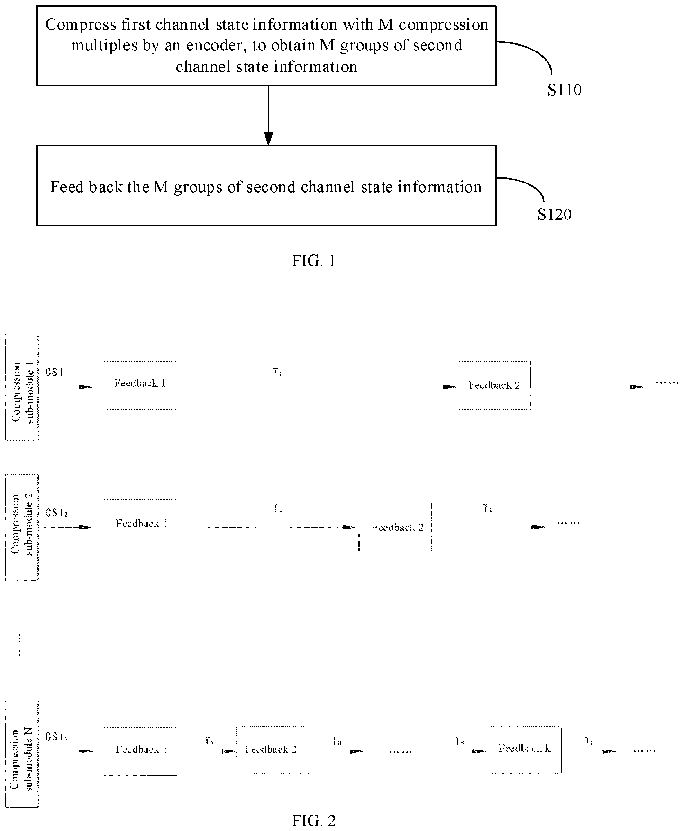

As a first aspect of the present disclosure, there is provided a feedback method for channel state information applied to a terminal, which, as shown in FIG. 1, includes the following operations S 110 to S 120.

At operation S 110, compressing first channel state information with M compression multiples by an encoder, to obtain M groups of second channel state information, where M is a positive integer and not less than 2.

At operation S120, feeding back the M groups of second channel state information.

In an antenna system, a terminal feeds back downlink channel state information to a base station. In the feedback method of the present disclosure, the first channel state information may reflect a downlink channel state to be fed back, and after the compression with M compression multiples on the downlink channel state information, M groups of second channel state information with a smaller data amount than the first channel state information can be obtained. A larger compression multiple means a smaller data amount in the obtained second channel state information, and thus lower overhead required for transmission of the second channel state information. In other words, the second channel state information with the largest compression multiple has the smallest data amount and involves the lowest overhead for transmission, while the second channel state information with the largest compression multiple has the largest data amount and involves the highest overhead for transmission.

Upon the receipt of the respective groups of second channel state information, a receiving end may decompress the groups of second channel state information to obtain multiple groups of decompressed channel state information, which may be then combined to obtain target channel state information having the same data amount as the first channel state information. In the present disclosure, the first channel state information obtained in real time is compressed and fed back with a smaller multiple at a lower frequency. It will be readily appreciated that the second channel state information with the smallest compression multiple is decompressed to obtain channel state information having the smallest difference with the first channel state information, and changes in the downlink channel state are not fast. Therefore, in a period of time, the channel state information obtained by decompressing the second channel state information with the smallest compression multiple can still reflect the downlink channel state information comprehensively to a certain extent. Further, in the present disclosure, the first channel state information obtained in real time is compressed and fed back with a larger compression multiple more frequently. Therefore, the second channel state information with a larger compression multiple may be decompressed to obtain channel state information capable of reflecting changes in the channel state. At the receiving end, by combining the channel state which can be timely obtained and reflect the change in the channel state with more comprehensive channel state information, target channel state information, which can reflect not only the downlink channel state comprehensively but also changes in the downlink channel state, can be obtained. Feeding back the second channel state information with a smaller compression multiple involves higher overhead, and feeding back the second channel state information with a smaller compression multiple involves lower overhead. Therefore, with the feedback method of the present disclosure, the feedback overhead can be reduced, and the receiving end can be enabled to know the downlink channel state in time.

Apparently, the present disclosure is not limited thereto, and the same frequency may be used to feed back the second channel state information with different compression multiples. After receiving the respective groups of second channel state information, the receiving end decompresses the groups of second channel state information to obtain the corresponding channel state information, which may be then combined to obtain target channel state information that can feed back the accurate downlink channel state information.

In summary, with the feedback method of the present disclosure, the base station can obtain the accurate downlink channel state information, and thus accurately determine the state of the downlink channel.

In the present disclosure, the encoder is a neural network model based on deep learning, and by means of the encoder, features of the first channel state information can be better learned and extracted, which is beneficial to better compression and feedback of the first channel state information.

In a scenario of a large-scale antenna array, the overhead for feedback of the downlink channel state information increases with the number of antennas. With the feedback method of the present disclosure, the downlink channel state information to be fed back may be compressed into a smaller data volume, thereby ensuring that the second channel state information reflecting the downlink channel state can be sent to a base station side in time. After being received at the base station side, the second channel state information is decompressed and combined to obtain the downlink channel state.

The implementations of the compression with the preset multiple are not particularly limited in the present disclosure. For example, an operation of implementing compression with a compression multiple $\gamma_L$ may include:

performing L times of local compression on first channel state information, where the L times of local compression satisfy the following equation (1):

$$\gamma_L = \prod_{j=1}^{L} \eta_j \qquad (1)$$

where j is a sequence number of local compression, and $1 \leq j \leq L$; and

$\eta_j$ is a compression multiple for the $j^{th}$ local compression.

In the present disclosure, as shown in FIG. 2, the encoder may include N compression sub-modules (compression sub-module 1, compression sub-module 2, ..., compression sub-module M, ..., compression sub-module N, respectively), where N is a positive integer not less than 2. In the operation of compressing first channel state information with M compression multiples by the encoder (i.e., S110), a plurality of the N compression sub-modules are selected to perform the compression with M compression multiples on the first channel state information.

In other words, the encoder may implement compression with N different compression multiples. The number of compression multiples may be selected based on a data amount of the downlink channel information. For example, when the downlink channel information has a larger data amount, more compression multiples may be used to compress the downlink channel state information, respectively, when the downlink channel information has a smaller data amount, fewer compression multiples may be used to compress the downlink channel state information, respectively.

As an optional implementation, $2 \le M \le N$, and the N compression sub-modules have compression multiples different from each other. As shown in FIG. 2, in the operation of compressing first channel state information with M compression multiples by the encoder, M of the N compression sub-modules are selected to perform the compression with M compression multiples on the first channel state information. In other words, the selected M compression sub-modules work in parallel, and feed back the obtained M groups of second channel state information in parallel. Specifically, in the implementation shown in FIG. 2, a compression sub-module 1 is used to compress the first channel state information to obtain a first group of second channel state information CSI1; a compression sub-module 2 is used to compress the first channel state information to obtain a second group of second channel state information CSI2; ..., and a compression sub-module N is used to compress the first channel state information to obtain an $N^{th}$ group of second channel state information CSIN.

Apparently, the present disclosure is not limited thereto. As another optional implementation, the N compression sub-modules in the encoder may operate in series. In other words, each compression sub-module can implement local compression with a corresponding multiple, and compression with a larger multiple can be implemented by a plurality of compression sub-modules in series. Accordingly, in the operation of compressing first channel state information with M compression multiples by the encoder, compression with any one of the M compression multiples is implemented by any one or combination of the compression sub-modules. In addition, a compression operation with the smallest compression multiple uses the smallest number of compression sub-modules, while a compression operation with the largest compression multiple uses the largest number of compression sub-modules.

For example, when the second channel state information corresponds to a compression multiple being 2, a compression sub-module with a compression multiple being 2 may be selected to implement the operation of compressing the first channel state information. When the second channel state information corresponds to a compression multiple being 10, a compression sub-module with a compression multiple being 2 may be selected for first compression on the first channel state information to obtain intermediate information, and then a compression sub-module with a compression multiple being 5 may be selected for secondary compression on the intermediate information, thereby obtaining the second channel state information with the compression multiple of 10. By analogy, the desired compression multiple can be achieved by a combination of compression sub-modules with various compression multiples.

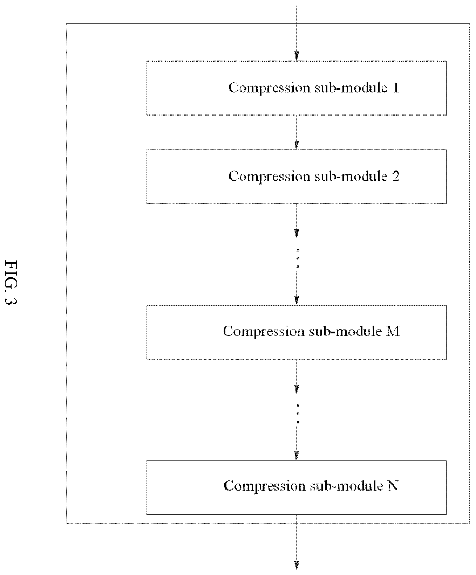

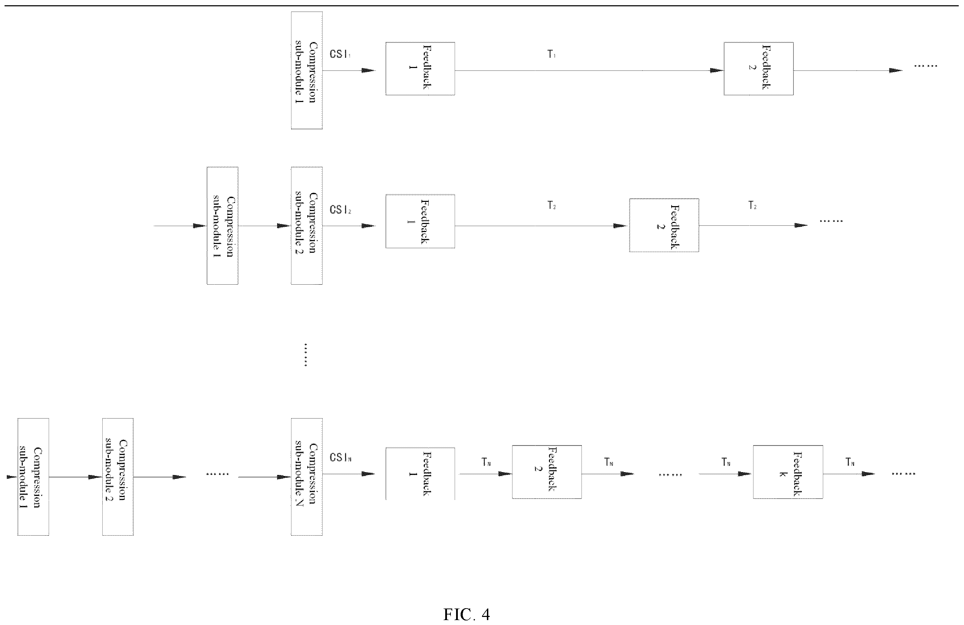

In the implementations shown in FIGs. 3 and 4, the compression sub-module 1 may be used to compress the first channel state information to obtain a first group of second channel state information CSI1; the compression sub-module 1 and the compression sub-module 2 may be used to compress the first channel state information to obtain a second group of second channel state information CSI2;..., and the compression sub-modules 1 to N may be used to compress the first channel state information to obtain the $N^{th}$ group of second channel state information CSIN.

In the operation of compressing the first channel state information by a plurality of compression sub-modules, the above equation (1) is also satisfied. That is, the resulting compression multiple is a product of the compression multiples of all compression sub-modules used for compression.

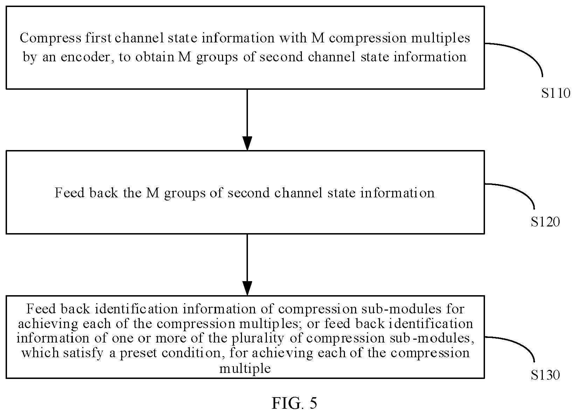

As described above, a plurality of the N compression sub-modules may be selected to perform the compression with M compression multiples on the first channel state information. To facilitate the receiving end to determine the compression sub-module that is specifically used for compression, optionally, as shown in FIG. 5, the feedback method may further include the following operation S130.

At operation S130:

feeding back identification information of a plurality of compression sub-modules for achieving each of the compression multiples; or
feeding back identification information of one or more of the plurality of compression sub-modules, which satisfy a preset condition, for achieving each of the compression multiples.

Through the operation S130, the receiving end can finally determine the identification information of the plurality of compression sub-modules used in the compression operation, and finally determine M compression multiples corresponding to the received M groups of second channel state information, respectively, and thereby determine the expansion multiples for decompressing the M groups of second channel state information.

In the present disclosure, an order of operations S130 and S120 are not particularly limited. For example, the operation S120 may be performed before or after the operation S130, or may be performed synchronously with the operation S130.

To reduce a data amount fed back to the base station, as an optional implementation, the N compression sub-modules are connected in series and output independently of each other, and the compression multiple for data output by the $i^{th}$ compression sub-module is: a compression multiple achieved jointly by the first to $i^{th}$ compression sub-modules in a data flow direction. Therefore, for the second channel state information with any compression multiple, only the sequence number of the compression sub-module outputting the second channel state information is fed back during feedback.

The identification information of each compression sub-module includes a sequence number of the compression sub-module, the N compression sub-modules are numbered according to a first preset rule.

In this way, when the operation S130 is performed, only one or more sequence numbers of the compression sub-modules for achieving each compression multiple may be fed back, and at the receiving end, the sequence numbers of the remaining compression sub-modules for achieving each compression multiple may be derived according to the first preset rule.

As an optional implementation, the first preset rule includes numbering the N compression sub-modules consecutively in increments from 1 to N, and the sequence number of each compression sub-module is positively correlated with a compression multiple output by the compression sub-module, and the preset condition includes the largest one of the sequence numbers of the plurality of compression sub-modules for achieving each compression multiple. That is, in the operation S130, the largest one of the sequence numbers of the plurality of compression sub-modules for achieving each compression multiple is fed back.

In an implementation where the N compression sub-modules are connected in series, a single compression sub-module is used for local compression, and it should be noted that different compression sub-modules may implement local compression with the same multiple, or may implement local compression with different multiples.

The following description is made taking the case where different compression sub-modules implement local compression of the same multiple as an example. For example, 3 compression sub-modules are connected in series. Each compression sub-module is capable of independently achieving 2-fold local compression. In this way, the compression sub-module numbered 1 outputs a compression multiple of 2 (that is, if the compression sub-module numbered 1 is used as an output module, data is input from an input end of the compression sub-module numbered 1, and output from an output end of the compression sub-module numbered 1, so that 2-fold compression of the data can be implemented); the compression sub-module numbered 2 outputs a compression multiple of 4 (that is, if the compression sub-module numbered 2 is used as an output module, data is input from the input end of the compression sub-module numbered 1, and output from an output end of the compression sub-module numbered 2; data is compressed sequentially by the compression sub-module numbered 1 and the compression sub-module numbered 2, so that 4-fold compression of the data can be implemented); and the compression sub-module numbered 3 outputs a compression multiple being 8 (that is, if the compression sub-module numbered 3 is used as an output module, data is input from the input end of the compression sub-module numbered 1, and output from an output end of the compression sub-module numbered 3; data is compressed sequentially by the compression sub-module numbered 1, the compression sub-module numbered 2, and the compression sub-module numbered 3, so that 8-fold compression of the data can be implemented).

As described above, for the first channel state information with any compression multiple, only the sequence number of the compression sub-module outputting the first channel state information is fed back during feedback. Therefore, in an implementation where the N compression sub-modules are numbered in increments from 1 to N, in the feedback of the sequence number of the compression sub-module, the largest one of the sequence numbers of the plurality of compression sub-modules for achieving each compression multiple is fed back. That is, the preset condition includes the largest one of the sequence numbers of the plurality of compression sub-modules for achieving each compression multiple.

Apparently, the present disclosure is not limited thereto. As another optional implementation, the first preset rule includes numbering the N compression sub-modules consecutively in decrements from N to 1, and the sequence number of each compression sub-module is negatively correlated with the compression multiple of the compression sub-module. In this way, the compression sub-module outputting the second channel state information is a compression sub-module with the smallest sequence number. Accordingly, the preset condition includes the smallest one of the sequence numbers of the plurality of compression sub-modules for achieving each compression multiple.

Specifically, for a group of compression sub-modules that implement compression of the second channel state information with any one of the compression multiples, only one of the group of compression sub-modules with the smallest sequence number is fed back in the feedback. After receiving the one with the smallest sequence number, the receiving end may determine the decompression sub-module corresponding to the compression sub-module with the smallest sequence number until the decompression sub-module corresponding to the compression sub-module with the sequence number N, and decompress that group of second channel state information.

In the present disclosure, after receiving the second channel state information, the receiving end may determine the value of M, and then may, according to the received sequence number, the sequence numbers of all compression sub-modules participating in the compression with various compression multiples.

As an optional implementation, the sequence number of the compression sub-module may be bit quantized.

$$B = \lceil \log_2 N \rceil$$

The sequence numbers of the N compression sub-modules correspond to $B = \lceil \log_2 N \rceil$ bit, where $\lceil \ \rceil$ is a sign of rounding up. Therefore, the sequence numbers of the M compression sub-modules corresponding to the M types of second channel state information fed back need M × B bits. For example, it is assumed that there are 4 compression sub-modules in total, which are 64-fold compression sub-module, 16-fold compression sub-module, 8-fold compression sub-module, and 4-fold compression sub-module, respectively. Therefore, the sequence numbers of the 4 compression sub-modules may be quantized with 2 bits (i.e., 00 denotes the 4-fold compression sub-module, 01 denotes the 8-fold compression sub-module, 10 denotes the 16-fold compression sub-module, and 11 denotes the 64-fold compression sub-module). Now, if the sequence number of the second channel state information obtained after the 4-fold compression and the sequence number of the second channel state information obtained after the 64-fold compression are desired to be fed back, 4 bits in total, i.e., 00 and 11, are fed back.

In another specific embodiment, the quantization mode may be adjusted to feed back the sequence number

$$B = \lceil \log_2 N \rceil$$

information. The largest or smallest one of the M sequence numbers is represented by $B = \lceil \log_2 N \rceil$ bits, where $\lceil \ \rceil$ is a sign of rounding up. When the largest or smallest sequence number is known, distances of the sequence numbers of the remaining M-1 compression sub-modules to the largest or smallest sequence number are sequentially represented

$$B' = \lceil \log_2 (N_{max} - N_{min}) \rceil$$

by differential values. The differential distance values are sequentially represented by bits from small to large, representing distances to the largest or smallest value for small to large. For example, it is assumed that there are 8 compression sub-modules in total, which are a 256-fold compression sub-module, a 128-fold compression sub-module, a 64-fold compression sub-module, a 32-fold compression sub-module, a 16-fold compression sub-module, an 8-fold compression sub-module, a 4-fold compression sub-module, and a 2-fold compression sub-module. Therefore, the sequence numbers of the 8 compression sub-modules may be quantized with 3 bits (i.e., 000 denotes 2-fold compression, 001 denotes 4-fold compression, 010 denotes 8-fold compression, 011 denotes 16-fold compression, 100 denotes 32-fold compression, 101 denotes 64-fold compression, 110 denotes 128-fold compression, and 111 denotes 256-fold compression). Now, if the sequence numbers of the second channel state information obtained by the 4-fold compression, the 64-fold compression, and the 128-fold compression are desired to be fed back, the sequence number of the largest compression multiple to be fed back is encoded as 110, the sequence number of the 64-fold differential compression is encoded as 001, and the sequence number of the 4-fold differential compression is encoded as 100, 9 bits in total. For a sequence number with a smaller differential distance, the bit redundancy representation may be reduced according to non-uniform quantization to further reduce the feedback bit overhead.

As described above, the encoder is a neural network model based on deep learning. Accordingly, the compression sub-module is also a neural network model based on deep learning.

In the present disclosure, for a group of compression sub-modules with different compression multiples, parameters corresponding to the compression sub-modules that achieve the same local compression multiple are shared so that the training operations of the encoder can be reduced.

As an optional implementation, each compression sub-module satisfies any one of the following conditions:

the compression sub-module includes a fully-connected network including at least two fully-connected layers;
the compression sub-module includes a convolutional network including at least one of: at least one convolutional layer, at least one residual block, or at least one dense block; or
the compression sub-module includes a recurrent neural network including a long short term memory (LSTM) or a gated recurrent unit (GRU).

In an implementation where the compression sub-module includes a fully-connected network including at least two fully-connected layers:

In the i$^{th}$ compression sub-module (i=1, 2, ..., N), the number of elements in input data of the fully-connected network is Nin, and the number of elements in output data of the fully-connected network is Nout, where Nout < Nin. Therefore, the $j^{th}$ local compression multiple $\eta j$=Nin_j/Nout_j inside the compression sub-module is the compression multiple of the $j^{th}$ local compression, where NinJ is the number of elements in the input data of the $j^{th}$ local compression, and Noutj is the number of elements in the output data of the $j^{th}$ local compression. For example, if Nin=1024 elements are fed into the compression sub-module, and Nout=256 elements are obtained after compression, then the compression multiple inside the compression sub-module is 1024/256=4. It should be noted that the compression multiple $\gamma i$ of the $i^{th}$ compression sub-module is a product of local compression multiples of the compression sub-modules 1 numbered

$$\gamma_i = \prod_{j=1}^{i} \eta_j$$

1 to i, that is, , where $\Pi$ is a sign of continual multiplication. The parameters of the fully-connected network include, but are not limited to, at least one of: the number of nodes in the fully-connected layer, a weight of the fully-connected layer, a normalization coefficient, or an activation function.

In an implementation where the compression sub-module includes a convolutional network:

In the $i^{th}$ compression sub-module (i=1, 2, ..., N), the number of elements in input data of the fully-connected network is Nin, and the number of elements in output data of the fully-connected network is Nout, where Nout < Nin. An $j^{th}$ local compression multiple $\eta j$=Nin_j/Nout_j inside the compression sub-module is the compression multiple of the $j^{th}$ local compression, where Nin_j is the number of elements in the input data of the $j^{th}$ local compression, and Nout_j is the number of elements in the output data of the $j^{th}$ local compression. For example, if data with a size of 16*16*2 and including Nin=512 elements are fed into the compression sub-module, and data with a size of 8*8*2 and including Nout=128 elements are obtained after compression, then the local compression multiple inside the compression sub-module is 512/128=4. It should be noted that the compression multiple $\gamma i$ of the $i^{th}$ compression sub-module is a product

$$\gamma_i = \prod_{j=1}^{i} \eta_j$$

of local compression multiples of the compression sub-modules numbered 1 to i, that is, , where $\Pi$ is a sign of continual multiplication. Parameters of the convolutional network include, but are not limited to, at least one of: an input size of the convolutional layer, a convolutional kernel parameter, a convolution step parameter, a data filling parameter, a pooling parameter, a normalization coefficient, or an activation function.

In an implementation where the compression sub-module includes a recurrent neural network:

The recurrent neural network may be a long short-term memory (LSTM), or a gated recurrent unit (GRU), or a Transformer structure based on an attention mechanism, or the like. In the $i^{th}$ compression sub-module (i=1, 2, ..., N), the total number of data elements input to the recurrent neural network is Nin, and the total number of data elements output is Nout, where Nout < Nin. The $j^{th}$ local compression multiple $\eta j$=Nin_j/Nout_j inside the compression sub-module is the compression multiple of the $j^{th}$ local compression, where Nin_j is the number of elements in the input data of the $j^{th}$ local compression, and Noutj is the number of elements in the output data of the $j^{th}$ local compression. For example, if Nin=1024 elements are fed into the compression sub-module, and Nout=256 elements are obtained after compression, then the local compression multiple inside the compression sub-module is 1024/256=4. It should be noted that the compression multiple $\gamma i$ of the $i^{th}$ compression sub-module is a product of local compression multiples of the compression sub-modules

$$\gamma_i = \prod_{j=1}^{i} \eta_j$$

numbered 1 to i, that is, , where $\Pi$ is a sign for continual multiplication. Parameters of the recurrent neural network include, but are not limited to, at least one of: the number of nodes in the recurrent layer, a weight of the recurrent layer, gate parameters in the recurrent layer, parameters of the attention mechanism, a normalization coefficient, or an activation function.

In the present disclosure, the number of compression multiples M may be the same as the number of compression sub-modules N, or may be different from the number of compression sub-modules N.

As described above, the second channel state information with a larger compression multiple may be fed back at a higher frequency, while the second channel state information with a smaller compression multiple may be fed back at a lower frequency. In other words, in the feedback of each group of second channel state information, the group of second channel state information is fed back periodically, and a length of a feedback period is negatively correlated with the compression multiple corresponding to the second channel state information fed back within the period. It should be noted that for the same compression multiple and different feedback periods, the first channel state information obtained in real time is compressed.

In the implementation shown in FIG. 4, the feedback period of the compression sub-module 1 is $T_1$, and the compression multiple is $\gamma_1$; the feedback period of the compression sub-module 2 is $T_2$, and the compression multiple is $\gamma_2$; ..., the feedback period of the compression sub-module N is $T_N$, and the compression multiple is $\gamma_N$, where $\gamma_1 < \gamma_2 < ... < \gamma_N$, $T_1 > T_2 > ... > T_N$.

It should be noted that although in FIG. 4, the first channel state information corresponding to the compression sub-module 1 is represented by $CSI_1$, the first channel state information corresponding to the compression sub-module 2 is represented by $CSI_2$, ..., the first channel state information corresponding to the compression sub-module N is represented by $CSI_N$, it is to be understood that at the start time of feeding back the channel state information to the base station, the first channel state information represented by $CSI_1$, the first channel state information represented by $CSI_2$, ..., and the first channel state information represented by $CSI_N$ are the same.

For convenience of description, two groups of data, i.e., the second channel state information with the largest compression multiple and the second channel state information with the smallest compression multiple, are taken as an example for illustration and explanation.

The feedback period of the second channel state information with the smallest compression multiple is denoted by $T_1$, and The feedback period of the second channel state information with the largest compression multiple is denoted by $T_M$, where $T_1 > T_M$. For ease of understanding, it is assumed that $T_1 = 3T_M$.

At time t0:

a transmitting end (i.e., a terminal) compresses first channel state information at time t0 with two compression multiples, to obtain second channel state information with the largest compression multiple and second channel state information with the smallest compression multiple; and

the transmitting end feeds back the second channel state information with the largest compression multiple and the second channel state information with the smallest compression multiple.

At time t0':

a receiving end (i.e., a base station) receives the second channel state information with the largest compression multiple, and second channel state information with the smallest compression multiple; and

the receiving end decompresses and combines the two groups of received second channel state information, so that target channel state information reflecting the downlink channel state at time t0 can be obtained.

At time t1 (t1=t0+$T_M$):

the transmitting end compresses the first channel state information at time t1 with the largest compression multiple, to obtain second channel state information with the largest compression multiple; and

at time t1' (t1'=t0'+$_{TM}$):

the receiving end receives the second channel state information with the largest compression multiple; and

the receiving end decompresses and combines the received second channel state information and the second channel state information with the smallest compression multiple received at time t0', to obtain the target channel state information at time t1'.

At time t2 (t2=t0+2$T_M$):

the transmitting end compresses the first channel state information at time t2 with the largest compression multiple, to obtain second channel state information with the largest compression multiple; and

at time t2' (t2'=t0'+2$T_M$):

the receiving end receives the second channel state information with the largest compression multiple; and

the receiving end decompresses and combines the received second channel state information and the second channel state information with the smallest compression multiple received at time t0', to obtain the target channel state information at time t2'.

At time t3 (t2=t0+3$T_M$):

the transmitting end compresses the first channel state information at time t3 with the largest compression multiple and with the smallest compression multiple, to obtain second channel state information with the largest compression multiple and second channel state information with the smallest compression multiple; and
at time t3'(t3'=t0'+3$T_M$):

the receiving end receives the second channel state information with the largest compression multiple, and the second channel state information with the smallest compression multiple; and
the receiving end decompresses and combines the received second channel state with the largest compression multiple and the received second channel state information with the smallest compression multiple, to obtain the target channel state information at time t3'.

It is to be understood that although $T_1$ is an integer multiple of $T_M$ in the above implementation, the present disclosure is not limited thereto, and $T_1$ may not be an integer multiple of $T_M$ as long as $T_1 > T_M$, for example, $T_1$=2.7$T_M$.

In other words, after receiving the second channel state information with the smallest compression multiple in the current period, the receiving end decompresses and combines the second channel state information with the smallest compression multiple and the second channel state information of any other compression multiple, to obtain the target channel state information of the current period. Before the second channel state information with the smallest compression multiple of a next feedback period is received, the second channel state information with the smallest compression multiple obtained in the current period may be used for decompressing and combining the second channel state information with larger compression multiples sent in various periods, so that the overhead of feeding back the downlink channel state information is reduced, and the downlink channel state information which is comprehensive and can reflect the real-time state can be obtained.

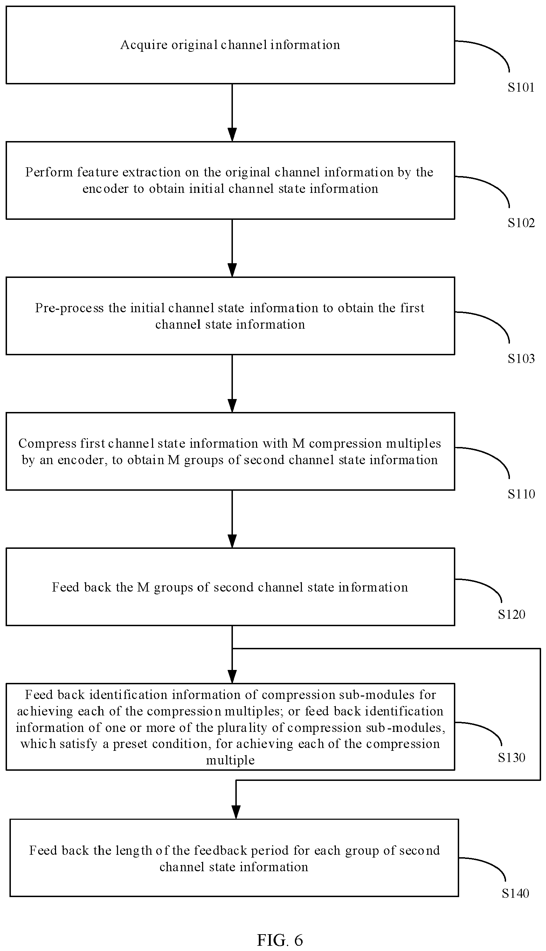

To facilitate the receiving end to process the second channel state information obtained in each feedback period, optionally, as shown in FIG. 6, the feedback method may further include the following operation S140.

At operation S140, feeding back the length of the feedback period for each group of second channel state information.

Optionally, as shown in FIG. 6, before compressing at least one group of first channel state information with M compression multiples by the encoder, the feedback method further includes the following operations S101 to S103.

At operation S101, acquiring original channel information.

At operation S 102, performing feature extraction on the original channel information by the encoder to obtain initial channel state information.

At operation S103, pre-processing the initial channel state information to obtain the first channel state information.

As an optional implementation, the decoder further includes a first processing module configured to perform the feature extraction on the original channel information.

The first processing module may also be a neural network based processing module. That is, the first processing module includes a plurality of network layers. Each of the plurality of network layers is independently selected from any one of:

a fully-connected layer, a pooling layer, a direct layer, or a batch normalization layer.

Optionally, the first channel state information obtained in the operation S103 has a dimension consistent with an input dimension of the encoder.

In the present disclosure, the specific operations of the "pre-processing" is not particularly limited. For example, the pre-processing may include, but is not limited to, domain transform (e.g., time domain to frequency domain, frequency domain to time domain, angle domain to space domain, space domain to angle domain), down-sampling, zero padding, grouping, truncating, or the like on the channel information, as long as the obtained first channel state information has a dimension conform to the input dimension of the encoder.

In the present disclosure, the "original channel information" is not particularly limited. Specifically, the original channel information may be obtained by:

a terminal obtains a channel H, which is generally a complex matrix of $N_t$*$N_r$, by receiving a reference signal, e.g., a channel state information reference signal (CSI-RS), where Nt and $N_r$ represent the number of transmitting antennas at the base station and the number of receiving antennas in the terminal, respectively. Here, the antennas may be logical antennas or various types of physical antennas. The original channel information may be time domain channel information Ht or frequency domain channel information $H_f$.

In an embodiment, the time domain channel information $H_t$ is a $N_t \times N_s$ complex matrix, where Nt is the number of antennas, and $N_s$ is the number of time domain sampling points. In an antenna dimension, the number of antennas Nt is $N_{tx} \times N_{rx}$, where $N_{tx}$ represents the number of transmitting antennas, and $N_{rx}$ represents the number of receiving antennas; or the number of antennas Nt may be $N_{tx} \times R$, where $N_{tx}$ represents the number of transmitting antennas, and R is the channel rank or the number of data streams. Due to sparsity of the time domain channel, a smaller channel value can be discarded on the dimension of the time domain sampling points, that is, the time domain sampling points can be truncated, and then the time domain channel information Ht has a size $N_t \times N'_s$, where $N'_s < N_s$. The antenna

dimension Nt may be in both the first dimension and the second dimension, i.e., $N'_s \times N_t$. The antenna dimension may be split into the above two dimensions based on different requirements.

In an embodiment, the frequency domain channel information $H_f$ is a $N_t \times N_f$ complex matrix, where Nt is the number of antennas, and $N_f$ is the frequency domain granularity, which may be in units of subcarriers or physical resource blocks or subbands. One physical resource block may include a plurality of subcarriers, such as 6, 12 or the like, and one subband may include a plurality of physical resource blocks. In the antenna dimension, the number of antennas Nt is $N_{tx}*N_{rx}$, where $N_{tx}$ represents the number of transmitting antennas, $N_{rx}$ represents the number of receiving antennas; or the number of antennas Nt may be $N_{tx}*R$, where $N_{tx}$ represents the number of transmitting antennas, and R is the channel rank or the number of data streams. Since the frequency domain granularity may be obtained by performing fast Fourier transform on time domain sampling points, the time domain sampling points may be truncated in the frequency domain granularity dimension, and then the frequency domain channel information $H_f$ has a size $N_t \times N'_f$, where $N'_f < N_f$. The antenna dimension Nt may be in both the first dimension and the second dimension, i.e., $N'_f \times N_t$. The antenna dimension may be split into the above two dimensions based on different requirements.

In an embodiment, the frequency domain channel information $H_f$ may be precoding. On the subband frequency domain granularity $N_f$, there are M PRB frequency band resources, and channels of every continuous K PRBs form one subband channel matrix, where the value of K is determined according to a bandwidth indicator. For example, each subband includes 4 PRBs at a bandwidth of 10M, each subband includes 8 PRBs at a bandwidth of 20M, so on and so forth. The K channels $H_1...H_K$ in each subband are multiplied by their conjugate matrix $H_1^H...H_K^H$, to obtain K correlation matrixes $R_1... R_K$, which are then averaged and subjected to singular value decomposition (SVD), and an eigenvector corresponding to the maximum eigenvalue is taken as an eigenvector $V_i$ of the subband, where i=1...$N_f$, The eigenvectors of all subbands are stacked together to form precoding V, a matrix of which has a size $N_t \times N_f$, where Nt is the number of antennas, and $N_f$ is the number of subbands. The antenna dimension Nt may be in both the first dimension and the second dimension, i.e., $N_f \times N_t$. The antenna dimension may be split into the above two dimensions based on different requirements.

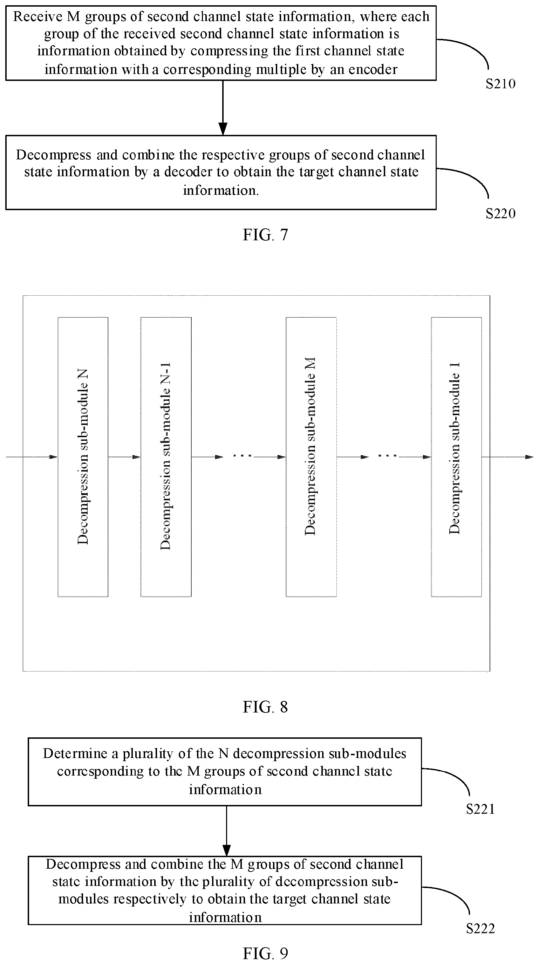

As a second aspect of the present disclosure, there is provided an acquisition method for channel state information applied to a base station, which, as shown in FIG. 7, includes the following operations S210 to S220.

At operation S210, receiving M groups of second channel state information, where each group of the received second channel state information is information obtained by compressing the first channel state information with a corresponding multiple by an encoder, where M is a positive integer and not less than 2.

At operation S220, decompressing and combining the respective groups of second channel state information by a decoder to obtain the target channel state information.

One group of second channel state information with the smallest data amount is decompressed with an expansion multiple greater than other groups of second channel state information, and the target channel state information has the same number of elements as the first channel state information.

The acquisition method provided in the second aspect of the present disclosure is used in conjunction with the feedback method provided in the first aspect of the present disclosure. The M groups of second channel state information received in operation S210 are the M groups of second channel state information fed back in operation S120.

The target channel state information obtained by decompressing and combining the second channel state information corresponds to the first channel state information, and the target channel state information can reflect a downlink channel state.

In the present disclosure, the first channel state information obtained in real time may be compressed and fed back with a larger compression multiple more frequently, while the first channel state information obtained in real time is compressed and fed back with a smaller multiple at a lower frequency.

In the present disclosure, the first channel state information obtained in real time is compressed and fed back with a smaller multiple at a lower frequency. It will be readily appreciated that the channel state information obtained by decompressing the second channel state information with the smallest compression multiple has the smallest difference with the first channel state information, and changes in the downlink channel state are not fast. Therefore, in a period of time, the channel state information obtained by decompressing the second channel state information with the smallest compression multiple can still reflect the downlink channel state information comprehensively to a certain extent. Further, in the present disclosure, the first channel state information obtained in real time is compressed and fed back with a larger compression multiple more frequently. Therefore, the second channel state information with a larger compression multiple may be decompressed to obtain channel state information capable of reflecting changes in the channel state. At a receiving end (i.e., a base station), by combining the channel state which can be timely obtained and reflect the change in the channel state with more comprehensive channel state information, target channel state information, which can reflect not only the downlink channel state comprehensively but also changes in the downlink channel state, can be obtained.

The decoder is a neural network model based on deep learning, and therefore, the channel state information obtained by decompression with the decoder has a smaller difference with the first channel state information.

As described above, the encoder includes N compression sub-modules. Accordingly, as shown in FIG. 8, in the acquisition method, the decoder also includes N decompression sub-modules, where N is a positive integer not less than 2.

As shown in FIG. 9, decompressing and combining the respective groups of second channel state information (i.e., operation S220) includes the following operations S221 to S222.

At operation S221, determining a plurality of the N decompression sub-modules corresponding to the M groups of second channel state information.

At operation S222, decompressing and combining the M groups of second channel state information by the plurality of decompression sub-modules respectively to obtain the target channel state information.

In the present disclosure, the N compression sub-modules of the encoder and the N decompression sub-modules of the decoder are in one-to-one correspondence. In one implementation, the N compression sub-modules with different compression multiples of the encoder may be operated in parallel to implement compression with N different compression multiples. Accordingly, in the decoder, the N decompression sub-modules have expansion multiples different from each other, and therefore, in the operation of determining the plurality of the N decompression sub-modules corresponding to the M groups of second channel state information, M of the N decompression sub-modules corresponding to the M groups of second channel state information are determined.

Accordingly, decompressing and combining the M groups of second channel state information by the plurality of decompression sub-modules respectively to obtain M groups of target channel state information (i.e., operation S222) includes:

decompressing the M groups of second channel state information by M decompression sub-modules respectively to obtain M groups of third channel state information; and
combining the M groups of third channel state information to obtain the target channel state information.

In the above implementation, the target state information can be obtained by performing the combining process on the results obtained by decompression.

In the present disclosure, how to combine the M groups of third channel state information is not particularly limited, and as an optional implementation, combining the M groups of third channel state information includes:

linking the M groups of third channel state information to obtain intermediate channel state information; and
compressing the intermediate channel state information to obtain the target channel state information.

The number of elements in the intermediate channel state information is greater than that of the first channel state information, and to obtain the target channel state information having the same number of elements as the first channel state information, the intermediate channel state information needs to be subjected to compression and dimensionality reduction. As an optional implementation, the intermediate channel state information may be subjected to compression and dimensionality reduction by a network layer such as a convolutional layer, to obtain the target channel state information.

Apparently, the present disclosure is not limited thereto. Optionally, the operation of combining the M groups of third channel state information may be performed by any one of:
average combination, square average combination, or weighted combination.

In another implementation provided above, N compression sub-modules are connected in series, and each group of second channel state information is obtained after compressing by at least one compression module. Accordingly, in the operation of determining the plurality of the N decompression sub-modules corresponding to the M groups of second channel state information, each group of second channel state information corresponds to at least one decompression sub-module, and the second channel state information with a larger compression multiple corresponds to more decompression sub-modules.

In this implementation, multiple groups of second channel state information are not decompressed at a time to a state having the same number of elements as the first channel state information before compression. Instead, the M-1 groups of second channel state information except the second channel state information with the smallest compression multiple (i.e., the second channel state information with the smallest compression multiple) are decompressed into first intermediate channel state information which has the same number of elements as the data amount in the second channel state information with the smallest compression multiple.

Then, the M-1 groups of first intermediate channel state information and the second channel state information with the smallest compression multiple are combined to obtain second intermediate channel state information, after which the combined second intermediate channel state information is combined by a plurality of decompression sub-modules to obtain the target channel state information.

In the present disclosure, how to decompress the second intermediate channel state information is not particularly limited. When the second intermediate channel state information has the same number of elements as the data amount in the second channel state information with the smallest compression multiple, one or more decompression sub-modules used in decompression of the second channel state information with the smallest compression multiple may be used for decompression of the second intermediate channel state information.

When the second intermediate channel state information has a greater number of elements than the data amount in the second channel state information with the smallest compression multiple, a plurality of decompression sub-modules may be re-selected for decompression of the second intermediate channel state information. It should be explained that the selected decompression sub-modules enable the same number of elements as that in the second intermediate channel state information to be input.

In the present disclosure, how to combine the M-1 groups of first intermediate channel state information and the second channel state information with the smallest compression multiple is not particularly limited. For example,

combining the M-1 groups of first intermediate channel state information and the second channel state information with the smallest compression multiple to obtain second intermediate channel state information includes:
linking the M-1 groups of first intermediate channel state information and the second channel state information with the smallest compression multiple to obtain second intermediate channel state information. Such linking may include two manners: one is to directly combine the M-1 groups of first intermediate channel state information and the second channel state information with the smallest compression multiple; and the other is to first combine the M-1 groups of first intermediate channel state information and the second channel state information with the smallest compression multiple, and then compress the combined data to obtain the second intermediate channel state information, so that the second intermediate channel state information has the same number of elements as the second channel state information with the smallest compression multiple.

As an optional implementation, a network layer such as a convolutional layer may be used to perform the operation of compressing the third intermediate channel state information to obtain the second intermediate channel state information.

As another optional implementation, the operation of combining the M groups of first intermediate channel state information to obtain the second intermediate channel state information may be performed by any one of: average combination, square average combination, or weighted combination.

As an optional implementation, the encoder includes N compression sub-modules, and the feedback method according to the first aspect of the present disclosure further includes feeding back identification information of compression sub-modules for implementing compression with various compression multiples at the base station side.

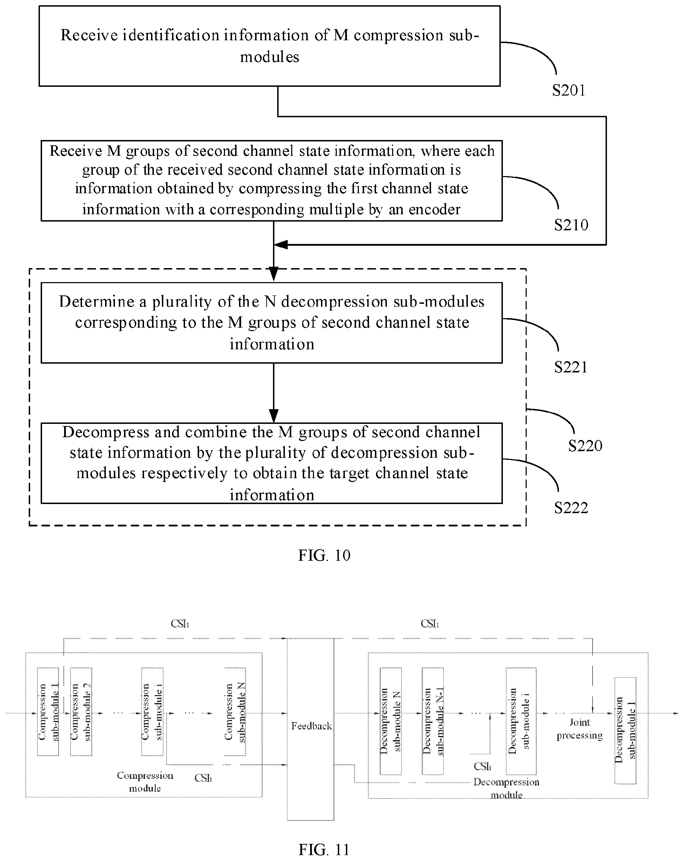

Accordingly, as shown in FIG. 10, before decompressing the respective groups of second channel state information, to obtain M groups of third channel state information (i.e., operation S220), the acquisition method further includes the following operation S201.

At operation S201, receiving identification information of a plurality of compression sub-modules.

Accordingly, operation S221 is specifically executed as:

determining, according to the received identification information of the plurality of compression sub-modules, identification information of a plurality of decompression sub-modules in one-to-one correspondence with the plurality of compression sub-modules; and
determining, according to the determined identification information of the plurality of decompression sub-modules, identification information of the decompression sub-modules for decompressing each group of second channel state information.

As described above, the N compression sub-modules are connected in series and output independently of each other, the identification information of each compression sub-module includes a sequence number of the compression sub-module, and the N compression sub-modules of the encoder are numbered according to a first preset rule. In the feedback of the identification information of the compression sub-module, the identification information of the compression sub-module that outputs each group of second channel state information is fed back. Accordingly, in the acquisition method, the received identification information of the compression sub-module is the identification information of the compression sub-module that outputs each group of second channel state information.

Accordingly, the N decompression sub-modules are connected in series and receive input data independently of each other. For the $i^{th}$ decompression sub-module, the decompression multiple of the output data is a decompression multiple achieved jointly by the first to the $i^{th}$ decompression sub-modules in a data flow direction. It should be noted that the "first decompression sub-module in the data flow direction" is not necessarily the decompression sub-module numbered 1.

The identification information of each decompression sub-module includes a sequence number of the decompression sub-module, the N decompression sub-modules of the decoder are numbered according to a second preset rule, and the first preset rule and the second preset rule are in correspondence.

Accordingly, in the operation of determining, according to the determined identification information of the plurality of decompression sub-modules, identification information of the decompression sub-modules for decompressing each group of second channel state information, determining, according to the received identification information of the compression sub-modules, identification information of decompression sub-modules to which each group of second channel state information is input.

After the decompression sub-module capable of inputting the second channel state information is determined, this decompression sub-module, and each subsequent decompression sub-module in the data flow direction, may be used to implement progressive decompression of the second channel state information.

For example, 3 decompression sub-modules are connected in series. Each compression sub-module is capable of implementing a 2-fold expansion independently. In this way, taking the decompression sub-module numbered 1 as an input module, 2-fold decompression can be implemented (that is, taking the decompression sub-module numbered 1 as an input module, data is input from an input end of the decompression sub-module numbered 1 and output from an output end of the compression sub-module numbered 1, thereby implementing 2-fold decompression of the data), taking the decompression sub-module numbered 2 as an input module, 4-fold decompression can be implemented (that is, taking the decompression sub-module numbered 2 as an input module, data is input from an input end of the decompression sub-module numbered 2 and output from an output end of the decompression sub-module numbered 1, so that data is decompressed sequentially by the decompression sub-module numbered 2 and the decompression sub-module numbered 1, to implement 4-fold decompression of the data), taking the compression sub-module numbered 3 as an input module, 8-fold decompression can be implemented (that is, taking the decompression sub-module numbered 3 as an input module, data is input from an input end of the decompression sub-module numbered 3 and output from an output end of the decompression sub-module numbered 1, so that data is decompressed sequentially by the decompression sub-module numbered 2, the decompression sub-module numbered 2, and the decompression sub-module numbered 1, to implement 8-fold decompression of the data).

According to the first preset rule and the received sequence number of the compression sub-module, the sequence numbers of the plurality of compression sub-modules can be determined. According to the correspondence between the first preset rule and the second preset rule, and the sequence numbers of the plurality of compression sub-modules, the sequence numbers of the plurality of decompression sub-modules can be determined.

As an optional implementation, the first preset rule includes numbering the N compression sub-modules consecutively in increments from 1 to N, and the sequence number of each compression sub-module is positively correlated the compression multiple of the compression sub-module, while the second preset rule includes numbering the N decompression sub-modules consecutively in decrements from N to 1, and the sequence number of each decompression sub-module is negatively correlated with the expansion multiple of the decompression sub-module.

The first preset rule and the second preset rule in correspondence includes: a compression sub-module and a decompression sub-module with the same sequence number in correspondence.

Moreover, a decompression sub-module numbered $i$ has an expansion multiple greater than a decompression sub-module numbered $i+1$, where $i$ is a variable and a positive integer, and $1 \leq i \leq N-1$.

In the operation (i.e., operation S221) of determining, according to the determined identification information of the plurality of decompression sub-modules, identification information of the decompression sub-modules for decompressing each group of second channel state information, a decompression sub-module corresponding to the received sequence number is taken as a decompression sub-module to which each group of second channel state information is input (which may be denoted as operation S221a).

For example, after receiving the sequence number 3, the decompression sub-module numbered 3 is taken as an input module for the second channel state information.

As shown in FIG. 11, the compression sub-module 1 corresponds to the decompression sub-module 1, and the second channel state information $CSI_1$ output by the compression sub-module 1 is decompressed by the decompression sub-module 1 after being fed back to the base station. The compression sub-module $i$ corresponds to the decompression sub-module $i$, and the second channel state information $CSI_i$ output by the compression sub-module $i$ is decompressed by the decompression sub-module $i$ after being fed back to the base station, so on and so forth.

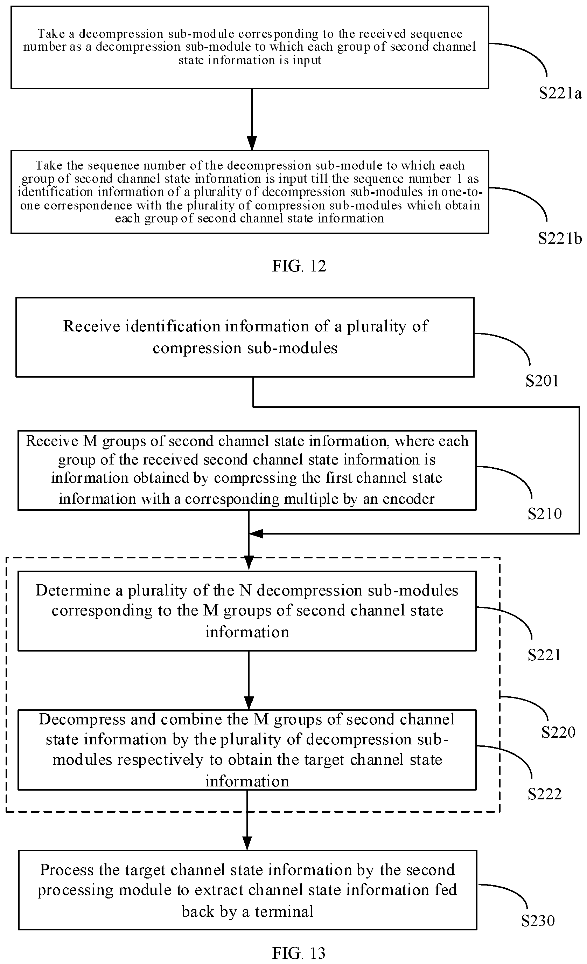

As described above, the sequence number of the compression sub-module fed back to the base station side is the largest sequence number of each group of compression sub-modules for achieving each compression multiple. Therefore, the received identification information may further include the largest one of the sequence numbers of a plurality of decompression sub-modules desired for decompression on each group of second channel state information. Accordingly, as shown in FIG. 12, determining, according to the identification information of the plurality of compression sub-modules, identification information of a plurality of decompression sub-modules in one-to-one correspondence with the plurality of compression sub-modules (i.e., operation S221) further includes the following operations S221b.

At operation S221b, taking the sequence number of the decompression sub-module to which each group of second channel state information is input till the sequence number 1 as identification information of a plurality of decompression sub-modules in one-to-one correspondence with the plurality of compression sub-modules which obtain each group of second channel state information.

The decompression sub-modules are described below with reference to the specific implementation shown in FIG. 8:

the N decompression sub-modules are numbered from N to 1 in a descending order. Accordingly, each decompression sub-module performs expansion or up-sampling on the compressed data module by module according to a descending order from i=N to 1. The number of elements Q in the expanded data is gradually increased until the last decompression sub-module outputting the largest number of elements, which is the same as the number of elements in the data originally input to the compression module, that is, $N_{compress} < Q_N < Q_{N-1} < Q_{N-2} < ... < Q_1 = N_{total}$, where $N_{compress}$ is the number of elements in the data initially fed into the decompression module, and $N_{total}$ is the number of elements in the data initially fed into the compression module.

Likewise, each decompression sub-module performs expansion or up-sampling on the data module by module according to a descending order from i=N to 1. the expansion multiple $\mu$ gradually increases (or the expansion degree gradually increases), where $\mu_i = N_{total} / Q_i$ where $Q_i$ is the number of elements in the data expanded by the decompression sub-module numbered i, until the last decompression sub-module with the largest expansion multiple, that is, $\mu_1 < \mu_2 < ... < \mu_N$.

As an optional implementation, decompressing the second intermediate channel state information by the decompression sub-modules corresponding to the second channel state information with the smallest compression multiple, to obtain the target channel state information includes:

determining a smallest one of the received sequence numbers;
determining the smallest one of the sequence numbers as a sequence number of a first decompression sub-module which decompresses the second intermediate channel state information with the smallest compression multiple; and
determining the decompression sub-modules with the smallest one of the received sequence numbers till the sequence number 1 as the decompression sub-modules for decompressing the second intermediate channel state information with the smallest compression multiple.

In the present disclosure, when the smallest one of the received sequence numbers is determined, an input module for decompressing the second channel state information with the smallest compression multiple can be determined (i.e., the input module is the decompression sub-module corresponding to the smallest one of all the sequence numbers fed back). When the input module in the group of decompression sub-modules for decompressing the second channel state information with the smallest compression multiple, the remaining decompression sub-modules for decompressing the second channel state information with the smallest compression multiple may be determined. In this way, all the decompression sub-modules for decompressing the second channel state information with the smallest compression multiple are determined, by which the second intermediate channel state information may be decompressed to obtain the target channel state information.

Apparently, the present disclosure is not limited thereto. As described above, the compression sub-modules may be numbered in a descending order, and therefore, the decompression sub-modules may be numbered in an ascending order. Specifically,

the first preset rule includes numbering the N compression sub-modules consecutively in decrements from N to 1, and the sequence number of each compression sub-module is negatively correlated with the compression multiple of the compression sub-module, and the second preset rule includes numbering the N decompression sub-modules consecutively in increments from 1 to N, and the sequence number of each decompression sub-module is positively correlated the expansion multiple of the decompression sub-module, and
the first preset rule and the second preset rule in correspondence includes: a compression sub-module and a decompression sub-module with the same sequence number in correspondence;
a decompression sub-module numbered i has an expansion multiple greater than a decompression sub-module numbered i+1, where i is a variable and a positive integer, and $1 \leq i \leq N-1$; and
in the operation (i.e., operation S221) of determining, according to the determined identification information of the plurality of decompression sub-modules, identification information of the decompression sub-modules for decompressing each group of second channel state information, decompression sub-modules corresponding to the received sequence numbers are taken as decompression sub-modules to which each group of second channel state information is input.

Optionally, determining, according to the identification information of the plurality of compression sub-modules, identification information of a plurality of decompression sub-modules in one-to-one correspondence with the plurality of compression sub-modules further includes:

taking the sequence number of the decompression sub-module to which each group of second channel state information is input till the sequence number N as identification information of a plurality of decompression sub-modules in one-to-one correspondence with the plurality of compression sub-modules.

Optionally, the identification information includes decompressing the second intermediate channel state information by the decompression sub-modules corresponding to the second channel state information with the smallest compression multiple, to obtain the target channel state information includes:

determining a largest one of the received sequence numbers;
determining the largest one of the sequence numbers as a sequence number of a first decompression sub-module which decompresses the second intermediate channel state information with the smallest compression multiple; and
determining the decompression sub-modules with the largest one of the received sequence numbers till the sequence number N as the decompression sub-modules for decompressing the second intermediate channel state information with the smallest compression multiple.

The above describes how to decompress and combine various groups of second channel state information by decompression sub-modules in series. Apparently, the present disclosure is not limited thereto, and for decompression sub-modules in parallel, decompressing and combining the M groups of second channel state information by the plurality of decompression sub-modules respectively includes:

decompressing each group of second channel state information by part of the plurality of decompression sub-modules, to obtain M groups of first intermediate channel state information, respectively, where the first intermediate channel state information has a smaller number of elements than the first channel state information;
combining the M groups of first intermediate channel state information to obtain second intermediate channel state information; and
decompressing the second intermediate channel state information by the remaining ones of the plurality of decompression sub-modules to obtain the target channel state information.

As described above, the decoder is a neural network model based on deep learning, and each decompression sub-module satisfies at least one of the following conditions:

the decompression sub-module includes a fully-connected layer;
the decompression sub-module includes a plurality of de-convolutional layers each including at least one of: an up-sampling layer, an up-pooling layer, a transposed convolutional layer, a residual block, a dense block or a direct layer; or
the decompression sub-module includes a recurrent neural network including a long short term memory (LSTM) or a gated recurrent unit (GRU).

In a specific embodiment, the decompression sub-module may be composed of a fully-connected network, where the fully-connected network includes at least two fully-connected layers. In a decompression sub-module numbered i (i=1, 2, ..., N), the number of elements in input data of the fully-connected network is $N_{in}$, and the number of elements in output data of the fully-connected network is $N_{out}$, where $N_{in} < N_{out}$. Therefore, the decompression sub-module has a local expansion multiple $\lambda_i = N_{out}/N_{in}$ inside. For example, if $N_{in}=128$ elements are fed into the decompression sub-module, and $N_{out}=256$ elements are obtained after expansion, then the expansion multiple inside the decompression sub-module is 256/128=2. It should be noted that the expansion multiple $\lambda_i$ of the decompression sub-module with the sequence number i is a product of local expansion multiples of the decompression sub-modules numbered N to i, that

$$\mu_i = \prod_{j=N}^{i} \lambda_j$$

is, , where $\Pi$ is a sign for continual multiplication. Parameters of the fully-connected network include, but are not limited to, at least one of: the number of nodes in the fully-connected layer, a weight of the fully-connected layer, a normalization coefficient, or an activation function.

In a specific embodiment, the decompression sub-module may be composed of a convolutional network, where the convolutional network includes at least one convolutional layer, at least one residual block, at least one dense block, or any combination thereof. In a decompression sub-module numbered i (i=1, 2, ..., N), the total number of data elements input to the convolutional network is Nin, and the total number of data elements output is Nout, where $N_{in} < N_{out}$. Therefore,

the decompression sub-module has a local expansion multiple $\lambda_i = N_{out}/N_{in}$ inside. For example, if data with a size of 8*8*2 and including $N_{in}=128$ elements are fed into the decompression sub-module, and data with a size of 16*16*2 and including $N_{out}=512$ elements are obtained after expansion, then the local expansion multiple inside the decompression sub-module is 512/128=4. It should be noted that the expansion multiple $\lambda_i$ of the decompression sub-module with the sequence number i is a product of local expansion multiples of the decompression sub-modules numbered N to i, that

is, $$\mu_i = \prod_{j=N}^{i} \lambda_j$$, where $\Pi$ is a sign for continual multiplication. Parameters of the convolutional network include, but are not limited to, at least one of: an input size of the convolutional layer, a convolutional kernel parameter, a convolution step parameter, a data filling parameter, an anti-pooling parameter, an up-sampling coefficient, a normalization coefficient, or an activation function.

In a specific embodiment, the decompression sub-module may be composed of a recurrent neural network, where the recurrent neural network may be a long short-term memory (LSTM), or a gated recurrent unit (GRU), or a Transformer structure based on an attention mechanism, or the like. In a decompression sub-module numbered i (i=1, 2, ..., N), the total number of data elements input to the recurrent neural network is $N_{in}$, and the total number of data elements output is $N_{out}$, where $N_{in}<N_{out}$. Therefore, the decompression sub-module has a local expansion multiple $\lambda_i = N_{out}/N_{in}$ inside. For example, if $N_{in}=128$ elements are fed into the decompression sub-module, and $N_{out}=256$ elements are obtained after expansion, then the local expansion multiple inside the decompression sub-module is 256/128=2. It should be noted that the expansion multiple $\lambda_i$ of the decompression sub-module with the sequence number i is a product of local expansion multiples of the compression sub-modules numbered N to i, that is, $$\mu_i = \prod_{j=N}^{i} \lambda_j$$, where $\Pi$ is a sign for continual multiplication. Parameters of the recurrent neural network include, but are not limited to, at least one of: the number of nodes in the recurrent layer, a weight of the recurrent layer, gate parameters in the recurrent layer, parameters of the attention mechanism, a normalization coefficient, or an activation function.

As an optional implementation, the decoder further includes a second processing module, and as shown in FIG. 13, the acquisition method further includes the following operation S230.

At operation S230, processing the target channel state information by the second processing module to extract channel state information fed back by a terminal.

The second processing module is also a neural network. As an optional implementation, optionally, the second processing module includes a neural network including a plurality of network layers each is independently selected from at least one of:

a convolutional layer, a pooling layer, or a direct layer.

Optionally, information on a length of a feedback period of each group of second channel state information is received, where the feedback period of the second channel state information is negatively correlated with a data amount of the second channel state information.

In the operation of decompressing and combining the respective groups of second channel state information, with the second channel state information of a longer feedback period, the second channel state information of shorter feedback periods throughout the longer feedback period can be combined.

In the present disclosure, the second channel state information with the smallest compression multiple may be directly used to combine the decompressed data obtained by decompressing the second channel state information received within a feedback period span of the second channel state information; or the second channel state information with the smallest compression multiple may be decompressed to obtain first decompressed data, which may be used to combine the decompressed data obtained by decompressing the second channel state information received within a feedback period span of the second channel state information.

In conjunction with a specific implementation, the following explains how to "with the second channel state information of a longer feedback period, decompress the obtained channel state information within one feedback period to jointly process the channel state information obtained by decompressing the second channel state information of shorter feedback periods throughout the longer feedback period in a plurality of feedback periods".

Two groups of data, i.e., the second channel state information with the largest compression multiple and the second channel state information with the smallest compression multiple, are taken as an example for illustration and explanation.

The feedback period of the second channel state information with the smallest compression multiple is denoted by $T_1$, and The feedback period of the second channel state information with the largest compression multiple is denoted by $T_M$, where $T_1 > T_M$. For ease of understanding, it is assumed that $T_1 = 3T_M$. In other words, the second channel state information with the largest compression multiple is fed back 3 times across a time span of the feedback period $T_1$. In the period $T_1$, the third channel state information obtained by decompressing the second channel state information with the smallest compression multiple is for joint processing of the third channel state information obtained by decompressing the second channel state information in three feedback periods $T_M$. Specifically:

At time t0':

a receiving end (i.e., a base station) receives the second channel state information with the largest compression multiple, and second channel state information with the smallest compression multiple; and
the receiving end decompresses and combines the two groups of received second channel state information, so that target channel state information reflecting the downlink channel state at time t0 can be obtained.

At time t1 (t1=t0+$T_M$):

a transmitting end compresses the first channel state information at time t1 with the largest compression multiple, to obtain second channel state information with the largest compression multiple; and
at time t1' (t1'=t0'+$T_M$):

the receiving end receives the second channel state information with the largest compression multiple; and
the receiving end decompresses and combines the received second channel state information and the second channel state information with the smallest compression multiple received at time t0', to obtain the target channel state information at time t1'.

At time t2 (t2=t0+2$T_M$):

the transmitting end compresses the first channel state information at time t2 with the largest compression multiple, to obtain second channel state information with the largest compression multiple; and
at time t2' (t2'=t0'+2$T_M$):

The receiving end receives the second channel state information with the largest compression multiple; the receiving end decompresses and combines the received second channel state information and the second channel state information with the smallest compression multiple received at time t0', to obtain the target channel state information at time t2'.

At time t3 (t2=t0+3$T_M$):

the transmitting end compresses the first channel state information at time t3 with the largest compression multiple and with the smallest compression multiple, to obtain second channel state information with the largest compression multiple and second channel state information with the smallest compression multiple; and
at time t3' (t3'=t0'+3$T_M$):

the receiving end receives the second channel state information with the largest compression multiple, and second channel state information with the smallest compression multiple; and
the receiving end decompresses and combines the received second channel state with the largest compression multiple and the received second channel state information with the smallest compression multiple, to obtain the target channel state information at time t3'.

It is to be understood that although $T_1$ is an integer multiple of $T_M$ in the above implementation, the present disclosure is not limited thereto, and $T_1$ may not be an integer multiple of $T_M$ as long as $T_1 > T_M$, for example, $T_1 = 2.7T_M$.
Several specific embodiments are described below:
In a specific embodiment, the decompression sub-module at the base station side may perform average combination on elements corresponding to the output $\mathrm{CSI}_1', \mathrm{CSI}_2', \ldots, \mathrm{CSI}_M'$ of a decompression sub-module with the smallest compression multiple (or longest feedback period) among the second channel information $CSI_1, CSI_2,...,CSI_M$ com-

pressed and fed back by M $(2 \leq M \leq N)$ different compression sub-modules, that is, $\mathrm{CSI}' = \mathrm{CSI}_1' + \mathrm{CSI}_2' + \cdots + \mathrm{CSI}_M' / M$, and the CSI' after the averaging is further fed into a subsequent decompression sub-module to recover the estimated channel information (i.e., target channel state information).

In a specific embodiment, the decompression sub-module at the base station side may perform square average combination on elements corresponding to the output $\mathrm{CSI}_1', \mathrm{CSI}_2', \ldots, \mathrm{CSI}_M'$ of a decompression sub-module with the smallest compression multiple (or longest feedback period) among the second channel information $\mathrm{CSI}_1, \mathrm{CSI}_2, \ldots, \mathrm{CSI}_M$ compressed and fed back by M ($M \geq 2$) different compression sub-modules, that is,

$$\mathrm{CSI}' = \sqrt{\mathrm{CSI}_1'^2 + \mathrm{CSI}_2'^2 + \cdots + \mathrm{CSI}_M'^2}\big/M$$

, and the CSI' obtained by the square averaging is further fed into a subsequent decompression sub-module to recover the estimated channel information (i.e., target channel state information).

In a specific embodiment, the decompression sub-module at the base station side may perform weighted combination on elements corresponding to the output $\mathrm{CSI}_1', \mathrm{CSI}_2', \ldots, \mathrm{CSI}_M'$ of a decompression sub-module with the smallest compression multiple (or longest feedback period) among the second channel information $\mathrm{CSI}_1, \mathrm{CSI}_2, \ldots, \mathrm{CSI}_M$ compressed and fed back by M ($2 \leq M \leq N$) different compression sub-modules, that is,

$$\mathrm{CSI}' = \alpha_1 \mathrm{CSI}_1' + \alpha_2 \mathrm{CSI}_2' + \cdots + \alpha_M \mathrm{CSI}_M', \quad \sum_{i=1}^{M} \alpha_i = 1$$

, and different weights $\alpha$ may be assigned according to contributions of the channel state information with different compression multiples to the current channel condition, and the weighted CSI' is further fed into a subsequent decompression sub-module to recover the estimated channel information (i.e., target channel state information).

In another specific embodiment, the decompression sub-module at the base station side may linking the output $\mathrm{CSI}_1', \mathrm{CSI}_2', \ldots, \mathrm{CSI}_M'$ of a decompression sub-module with the smallest compression multiple (or longest feedback period) among the second channel information $\mathrm{CSI}_1, \mathrm{CSI}_2, \ldots, \mathrm{CSI}_M$ compressed and fed back by M *($2 \leq M \leq N$)* different compression sub-modules, that is, $\mathrm{CSI}_1, \mathrm{CSI}_2, \ldots, \mathrm{CSI}_M$, and parallel combination is performed according to one of the dimensions to form a new CSI', and the CSI' obtained after the linking is further fed into a subsequent decompression sub-module to recover the estimated channel information (i.e., target channel state information).

As a specific example, before linking, the $\mathrm{CSI}_1'$ and $\mathrm{CSI}_2'$ output by the decompression sub-module are both 256*1 dimensional vectors, which are combined in parallel according to a second dimension to form a new CSI' being a 256*2 dimensional matrix, before being fed into a subsequent decompression sub-module to recover the estimated channel information.

After being received at the base station side, the second channel information of different compression multiples fed back by the terminal is sent to a decompression module in a decoder for processing, to generate enhanced target channel state information. The input of the decompression module is the second channel state information $\mathrm{CSI}_1, \mathrm{CSI}_2, \ldots, \mathrm{CSI}_M$ with M ($2 \leq M \leq N$) compression multiples fed back by the terminal, which is fed into the corresponding decompression sub-module according to the sequence number of the corresponding compression sub-module in the second channel state information fed back, to complete information expansion of the compressed channel information. In the 1st, 2nd, ..., Nth compression sub-modules, the numbers of elements in the output second channel state information are $P_1$, $P_2$, ..., $P_N$, respectively, which are the same as the numbers of input elements $Q_1$, $Q_2$, ..., $Q_N$ of the N decompression sub-modules at the terminal. In other words, the number of elements in the output data of the ith compression sub-module at the terminal side is the same as the number of elements in the output data of the ith decompression sub-module at the base station side, and the sub-modules of the same sequence number jointly form N pairs of compression sub-modules and decompression sub-modules.

After being received at the base station side, the M ($2 \leq M \leq A$) pieces of second channel state information $\mathrm{CSI}_1, \mathrm{CSI}_2, \ldots, \mathrm{CSI}_M$ in different periods fed back by the terminal are fed into the decompression modules for information expansion after compression, and, at an output end of the decompression sub-module corresponds to the second channel state information with the longest feedback period (or the second channel state information with the smallest compression multiple at the terminal), combined and coordinated with the channel state information recovered in other feedback periods at the decompression sub-module. The specific flow is shown in FIG. 4. For example, the terminal feeds back two pieces of second channel state information to the base station, one with a compression multiple being 4 and the other 64, where the $\mathrm{CSI}_1$ with the compression multiple being 64 is fed back once every 1 TTI, and the $\mathrm{CSI}_2$ with the compression multiple being 4 is fed back once every 10 TTIs. The base station records and stores the channel information of $\mathrm{CSI}_2$, performs channel information coordination with the $\mathrm{CSI}_1$ channel information with a shorter feedback period at an output end of a decompression sub-module at the base station side corresponding to the compression module with the compression multiple being 4, and then sends the processed channel information to the subsequent decompression sub-module for processing until the estimated channel state information before compression (i.e., the target channel state information) is recovered.

The foregoing describes determining the compression multiple from the sequence number of the compression sub-module sent from the transmitting end, and further determining an expansion multiple for decompressing each group of second channel state information. Apparently, the present disclosure is not limited thereto. The transmitting end may send the length of the feedback period for each group of second channel state information, and accordingly, the base station may determine, according to the received information on the length of the feedback period of each group of second channel state information, an expansion multiple for decompressing the group of second channel state information.

As another optional implementation, the transmitting end may feed back a compression multiple corresponding to each group of second channel state information, and accordingly and optionally, the acquisition method further includes:

receiving information on the compression multiple corresponding to each group of second channel state information; and
determining the expansion multiple of each group of second channel state information according to the information on the compression multiple corresponding to each group of second channel state information.

In the present disclosure, the transmitting end may further feed back index information of the encoder, and accordingly, the base station may receive the index information of the encoder, and determine a decoder that performs the decompression according to the index information of the encoder.

As an optional implementation, encoders of different types of index information may be used for different application scenarios. Decoders corresponding to encoders of different types of index information may also be used for different application scenarios.

According to different actual environmental scenarios, neural network parameters of K0 sets of auto-encoders can be obtained, where each auto-encoder includes one pair of encoder and decoder. The terminal and the base station store neural network parameters of the K0 sets of encoders and decoders, respectively. When in use, the base station configures indexes of the K0 sets of encoders and decoders through higher-layer signaling according to the channel condition, so that the terminal knows from which set the parameter of the encoder is used upon receiving the index. In other words, the base station configures an index of a pair of encoder and decoder, while the terminal receives the index of the pair of encoder and decoder, and determines a parameter corresponding to the encoder. The terminal selects one encoder according to at least one factor, such as a scene of channel, angle spread, delay spread, or Doppler spread of channel, or the like, and sends an index of the selected encoder to the base station through physical layer signaling and/or higher-layer signaling. The base station obtains the corresponding decoder according to the index of the encoding network fed back by the terminal, and processes the received second channel information to obtain third channel information. If parameters of only K0=1 set of encoder is provided, an index 0 is fed back by the terminal.

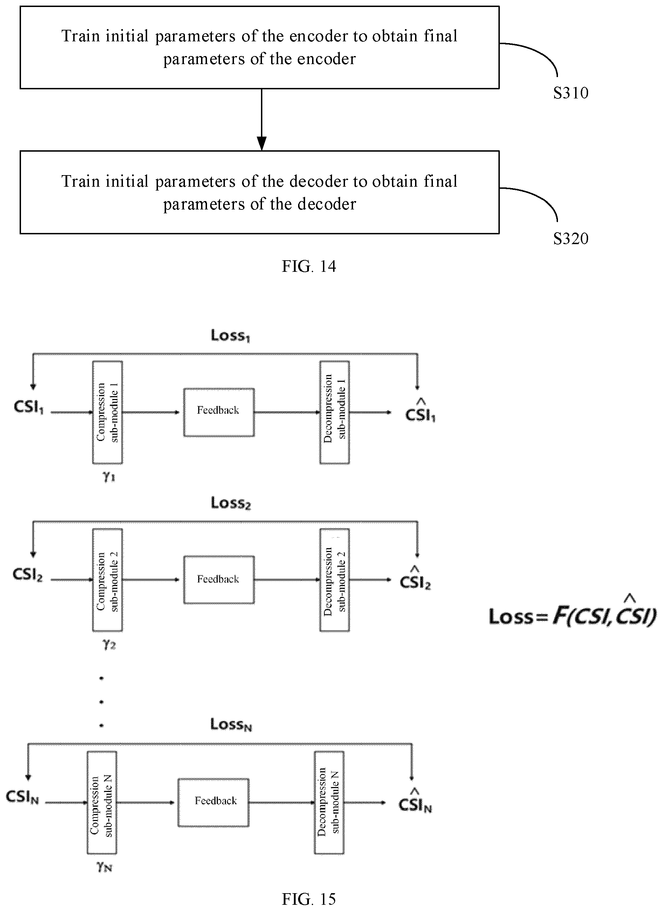

As a third aspect of the present disclosure, there is provided a method for joint training of an encoder and a decoder, where the encoder is capable of compression with N compression multiples, the decoder is capable of decompression with N expansion multiples, and values of the N compression multiples are equal to values of the N decompression expansion multiples one by one, and as shown in FIG. 14, the method includes the following operations S310 to S320.

At operation S310, training initial parameters of the encoder to obtain final parameters of the encoder.

At operation S320, training initial parameters of the decoder to obtain final parameters of the decoder.

A training error in the operation of training initial parameters of the encoder, and a training error in the operation of training initial parameters of the decoder, are each an error function between an input of the encoder and an output of the decoder.

In the present disclosure, the encoder and the decoder are jointly trained, and in the encoder and decoder trained in the above method, the input information of the encoder and the output information of the decoder are closer.

As described above, the encoder includes N compression sub-modules, which are capable of implementing compression with N compression multiples, respectively, the initial parameters of the encoder include initial parameters of the N compression sub-modules, and the final parameters of the encoder include final parameters of the N compression sub-modules.

The decoder includes N decompression sub-modules, which are capable of implementing decompression with N expansion multiples, respectively, the initial parameters of the decoder include initial parameters of the N decompression sub-modules, and the final parameters of the decoder include final parameters of the N decompression sub-modules.

Accordingly, training initial parameters of the encoder includes training the initial parameters of the N compression sub-modules, respectively, and training initial parameters of the decoder includes training the initial parameters of the N decompression sub-modules, respectively.

Optionally, a training error in training the initial parameters of a compression sub-module is an error function between an input of the compression sub-module and an output of the decompression sub-module having an expansion multiple value the same as a compression multiple value of the compression sub-module.

As an optional implementation, to train parameters with better generalization under the sub-modules with different compression multiples, the error function satisfies:

$$\text{Loss} = \sum_{i=1}^{N} k_i \text{Loss}_i \, ,$$

where Loss is the error;

i is the sequence number of the compression sub-module and the decompression sub-module;

$k_i$ is a weighting coefficient of the $i^{th}$ compression sub-module and the $i^{th}$ decompression sub-module; and

$$\sum_{i=1}^{N} k_i = 1 \, .$$

By performing weighted joint training on the training error functions of the N different compression sub-modules and the corresponding decompression sub-modules to further provide model training contributions of different degrees for the models under various compression multiples, a higher weight may be given to the training error function of a model with a larger or smaller compression multiple according to the actual conditions. The sub-modules with all compression multiples are trained coordinately with the new training error function until the new training error Loss is minimum and almost unchanged, that is, until the training on the network parameters of the compression module and the decompression module is completed. Then, in cooperation with the parameter training of the first processing module and the second processing module in the encoder and the decoder, the parameter training of a set of encoder and decoder at the terminal and the base station is completed.

As another optional implementation, the error function is selected from any one of:

a mean square error function, an absolute loss function, or a logarithmic loss function.

In a specific embodiment, the terminal and the base station firstly train the compression sub-module with the smallest compression multiple $\gamma_1$ and the corresponding decompression sub-module jointly, and the training is stopped when the training error Loss is minimum and almost unchanged, that is, when the training of the neural network parameters of the compression sub-module and the corresponding decompression sub-module is completed. The training error Loss is an error function between the input of a compression sub-module and the output of a corresponding decompression sub-module, that is, $Loss=F(CSI, \hat{CSI})$, which represents a loss error or proximity between the recovered data output of the decompression sub-module and the original data input to the compression sub-module, and may be a mean square error function, an absolute loss function, or a logarithmic loss function, or the like, as specifically shown in FIG. 15. When the network parameter training is completed, the network parameters of the two modules are fixed and remain unchanged at the terminal side and the base station side. Then, the terminal and the base station train the compression sub-module with the second smallest compression multiple $\gamma_2$ and the corresponding decompression sub-module jointly again, and when the training Loss 2 is minimum and almost unchanged, training of the neural network parameters of the compression sub-module with the second smallest compression multiple $\gamma_2$ and the corresponding decompression sub-module are completed, and the network parameters of the two modules are fixed and remain unchanged. So on and so forth, until the terminal and the base station complete the joint training of the compression sub-module with the largest compression multiple $\gamma_N$ and the corresponding decompression sub-module (where $\gamma_1 < \gamma_2 < ... < \gamma_N$). Then, in cooperation with the parameter training of the first processing module and the second processing module in the encoder and the decoder, the parameter training of a set of encoder and decoder at the terminal and the base station is completed.

In a specific embodiment, the terminal and the base station firstly train the compression sub-module with the largest compression multiple $\gamma_1$ and the corresponding decompression sub-module jointly, and the training is stopped when the training error Loss is minimum and almost unchanged, that is, when the training of the neural network parameters of the compression sub-module and the corresponding decompression sub-module is completed. The training error Loss may be a mean square error function, an absolute loss function, or a logarithmic loss function, or the like. When the network parameter training is completed, the network parameters of the two modules are fixed and remain unchanged at the terminal side and the base station side. Then, the terminal and the base station train the compression sub-module with the second largest compression multiple $\gamma_2$ and the corresponding decompression sub-module jointly again, and when the training Loss 2 is minimum and almost unchanged, training of the neural network parameters of the compression sub-module with the second largest compression multiple $\gamma_2$ and the corresponding decompression sub-module are completed, and the network parameters of the two modules are fixed and remain unchanged. So on and so forth, until the terminal and the base station complete the joint training of the compression sub-module with the smallest compression multiple $\gamma_N$ and the corresponding decompression sub-module (where $\gamma_1 > \gamma_2 > ... > \gamma_N$ ). Then, in cooperation with the parameter training of the first processing module and the second processing module in the encoder and the decoder, the parameter training of a set of encoder and decoder at the terminal and the base station is completed.

As a fourth aspect of the present disclosure, there is provided a terminal, including:

a first storage module having a first executable program stored thereon; and
one or more first processors which, when invoking the first executable program, implement the feedback method provided in the first aspect of the present disclosure.

As a fifth aspect of the present disclosure, there is provided a base station, including

a second storage module having a second executable program stored thereon; and
one or more second processors which, when invoking the second executable program, implement the acquisition method provided in the second aspect of the present disclosure.

As a sixth aspect of the present disclosure, there is provided an electronic device, including:

a third storage module having a third executable program stored thereon; and
one or more third processors which, when invoking the third executable program, implement the method for joint training provided in the third aspect of the present disclosure.

As a seventh aspect of the present disclosure, there is provided a computer-readable medium having an executable program stored thereon which, when invoked, causes any one of the feedback method provided in the first aspect, the acquisition method provided in the second aspect or the training method provided in the third aspect of the present disclosure to be implemented.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disc (DVD) or any other optical disc storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

**Claims**

1. A feedback method for channel state information applied to a terminal, comprising:

   compressing first channel state information with M compression multiples by an encoder, to obtain M groups of second channel state information, where M is a positive integer and not less than 2; and
   feeding back the M groups of second channel state information.

2. The feedback method according to claim 1, wherein the encoder comprises N compression sub-modules, where N is a positive integer not less than 2, and in the operation of compressing the first channel state information with M compression multiples by the encoder, a plurality of the N compression sub-modules are selected to perform the compression with M compression multiples on the first channel state information.

3. The feedback method according to claim 2, wherein 2≤M≤N, the N compression sub-modules have compression multiples different from each other, and in the operation of compressing the first channel state information with M compression multiples by the encoder, M of the N compression sub-modules are selected to perform the compression with M compression multiples on the first channel state information.

4. The feedback method according to claim 2, wherein in the operation of compressing the first channel state information with M compression multiples by the encoder, compression with any one of the M compression multiples is implemented by any one or combination of the compression sub-modules, wherein a compression operation with the smallest compression multiple uses the smallest number of compression sub-modules, while a compression operation with the largest compression multiple uses the largest number of compression sub-modules.

5. The feedback method according to claim 4, wherein the feedback method further comprises:

   feeding back identification information of compression sub-modules for achieving each of the compression multiples, or
   feeding back identification information of one or more of the plurality of compression sub-modules, which satisfy a preset condition, for achieving each of the compression multiples.

6. The feedback method according to claim 5, wherein the N compression sub-modules are connected in series and output independently of each other, the identification information of each compression sub-module comprises a sequence number of the compression sub-module, the N compression sub-modules are numbered according to a first preset rule, and in the operation of feeding back the identification information of one or more of the plurality of compression sub-modules, which satisfy the preset condition, for achieving each of the compression multiples, at least the identification information of the compression sub-module that outputs each group of second channel state information is fed back.

7. The feedback method according to claim 6, wherein the first preset rule comprises numbering the N compression sub-modules consecutively in increments from 1 to N, and the sequence number of each compression sub-module is positively correlated with a compression multiple output by the compression sub-module, and the preset condition comprises the largest one of the sequence numbers of the plurality of compression sub-modules for achieving each compression multiple; or
   the first preset rule comprises numbering the N compression sub-modules consecutively in decrements from N to 1, and the sequence number of each compression sub-module is negatively correlated with the compression multiple of the compression sub-module, and the preset condition comprises the smallest one of the sequence numbers of the plurality of compression sub-modules for achieving each compression multiple.

8. The feedback method according to claim 2, wherein each compression sub-module satisfies any one of the following conditions:

   the compression sub-module comprises a fully-connected network comprising at least two fully-connected layers;
   the compression sub-module comprises a convolutional network comprising at least one of: at least one convolutional layer, at least one residual block, at least one dense block, at least one pooling layer, or at least one direct layer; or
   the compression sub-module comprises a recurrent neural network comprising a long short term memory (LSTM)

or a gated recurrent unit (GRU).

9. The feedback method according to any one of claims 1 to 8, wherein in the operation of feeding back each group of second channel state information, the group of second channel state information is fed back periodically, and a length of a feedback period is negatively correlated with the compression multiple corresponding to the second channel state information fed back within the period, and
for the same compression multiple and different feedback periods, the first channel state information obtained in real time is compressed.

10. The feedback method according to claim 9, wherein the feedback method further comprises:
feeding back the length of the feedback period for each group of second channel state information.

11. The feedback method according to any one of claims 1 to 8, wherein before compressing first channel state information with M compression multiples by the encoder, the feedback method further comprises:

acquiring original channel information;
performing feature extraction on the original channel information by the encoder to obtain initial channel state information; and
pre-processing the initial channel state information to obtain the first channel state information.

12. The feedback method according to claim 11, wherein the encoder further comprises a first processing module configured to perform the feature extraction on the original channel information, and the first processing module satisfies any one of the following conditions:

the first processing module comprises a fully-connected network comprising at least two fully-connected layers;
the first processing module comprises a convolutional network comprising at least one of: at least one convolutional layer, at least one residual block, at least one dense block, at least one pooling layer, or at least one direct layer; or
the first processing module comprises a recurrent neural network comprising a long short term memory (LSTM) or a gated recurrent unit (GRU).

13. The feedback method according to claim 12, wherein in the operation of pre-processing the initial channel state information to obtain the first channel state information, the first channel state information has a dimension consistent with an input dimension of the encoder.

14. The feedback method according to any one of claims 1 to 8, wherein the feedback method further comprises:
feeding back compression multiples corresponding to the M groups of second channel state information.

15. An acquisition method for channel state information applied to a base station, comprising:

receiving M groups of second channel state information, where each group of the received second channel state information is information obtained by compressing first channel state information with a corresponding multiple by an encoder, where M is a positive integer and not less than 2; and
decompressing and combining the respective groups of second channel state information by a decoder to obtain target channel state information,
wherein one group of second channel state information with the smallest data amount is decompressed with an expansion multiple greater than other groups of second channel state information, and the target channel state information has the same number of elements as the first channel state information.

16. The acquisition method according to claim 15, wherein the decoder comprises N decompression sub-modules, where N is a positive integer not less than 2, and decompressing and combining the respective groups of second channel state information comprises:

determining a plurality of the N decompression sub-modules corresponding to the M groups of second channel state information; and
decompressing and combining the M groups of second channel state information by a plurality of decompression sub-modules respectively to obtain the target channel state information.

**17.** The acquisition method according to claim 16, wherein $2 \leq M \leq N$, the N decompression sub-modules have expansion multiples different from each other, and in the operation of determining the plurality of the N decompression sub-modules corresponding to the M groups of second channel state information, M of the N decompression sub-modules corresponding to the M groups of second channel state information are determined, and

decompressing and combining the M groups of second channel state information by the plurality of decompression sub-modules respectively to obtain M groups of target channel state information comprises:

decompressing the M groups of second channel state information by M decompression sub-modules respectively to obtain M groups of third channel state information; and

combining the M groups of third channel state information to obtain the target channel state information.

**18.** The acquisition method according to claim 17, wherein combining the M groups of third channel state information comprises:

linking the M groups of third channel state information to obtain intermediate channel state information; and compressing the intermediate channel state information to obtain the target channel state information; or, performing the operation of combining the M groups of third channel state information by any one of:

average combination, square average combination, or weighted combination.

**19.** The acquisition method according to claim 16, wherein in the operation of determining the plurality of the N decompression sub-modules corresponding to the M groups of second channel state information, each group of second channel state information corresponds to at least one decompression sub-module, and the second channel state information with a greater compression multiple corresponding to more decompression sub-modules; and

decompressing and combining the M groups of second channel state information by the plurality of decompression sub-modules respectively comprises:

decompressing the second channel state information other than the second channel state information with the smallest compression multiple by corresponding ones of a plurality of decompression sub-modules, to obtain M-1 groups of first intermediate channel state information, wherein the first intermediate channel state information has the same number of elements as the second channel state information with the smallest compression multiple;

combining the M-1 groups of first intermediate channel state information and the second channel state information with the smallest compression multiple to obtain second intermediate channel state information; and decompressing the second intermediate channel state information by a plurality of decompression sub-modules to obtain the target channel state information.

**20.** The acquisition method according to claim 19, wherein combining the M-1 groups of first intermediate channel state information and the second channel state information with the smallest compression multiple to obtain second intermediate channel state information comprises:

linking the M-1 groups of first intermediate channel state information and the second channel state information with the smallest compression multiple to obtain the second intermediate channel state information; or performing the operation of combining the M-1 groups of first intermediate channel state information and the second channel state information with the smallest compression multiple to obtain second intermediate channel state information by any one of:

average combination, square average combination, or weighted combination.

**21.** The acquisition method according to claim 19, wherein the encoder comprises N compression sub-modules, and before decompressing and combining the respective groups of second channel state information, the acquisition method further comprises: receiving identification information of a plurality of compression sub-modules; and determining the plurality of the N decompression sub-modules corresponding to the M groups of second channel state information comprises:

determining, according to the received identification information of the plurality of compression sub-modules, identification information of the plurality of decompression sub-modules in one-to-one correspondence with the plurality of compression sub-modules; and

determining, according to the determined identification information of the plurality of decompression sub-modules, the identification information of the decompression sub-modules for decompressing each group of second channel state information.

22. The acquisition method according to claim 21, wherein the N compression sub-modules are connected in series and output independently of each other, the identification information of each compression sub-module comprises a sequence number of the compression sub-module, the N compression sub-modules of the encoder are numbered according to a first preset rule, and the received identification information of the compression sub-module is the identification information of the compression sub-module that outputs each group of second channel state information;

the N decompression sub-modules are connected in series and receive input data independently of each other, the identification information of each decompression sub-module comprises a sequence number of the decompression sub-module, the N decompression sub-modules of the decoder are numbered according to a second preset rule, and the first preset rule and the second preset rule are in correspondence, and
in the operation of determining, according to the determined identification information of the plurality of decompression sub-modules, identification information of the decompression sub-modules for decompressing each group of second channel state information, determining, according to the received identification information of the compression sub-modules, identification information of decompression sub-modules to which each group of second channel state information is input.

23. The acquisition method according to claim 22, wherein the first preset rule comprises numbering the N compression sub-modules consecutively in increments from 1 to N, and the sequence number of each compression sub-module is positively correlated the compression multiple of the compression sub-module, while the second preset rule comprises numbering the N decompression sub-modules consecutively in decrements from N to 1, and the sequence number of each decompression sub-module is negatively correlated with the expansion multiple of the decompression sub-module, and

the first preset rule and the second preset rule in correspondence comprises: a compression sub-module and a decompression sub-module with the same sequence number in correspondence;
a decompression sub-module numbered i has an expansion multiple smaller than a decompression sub-module numbered i+1, where i is a variable and a positive integer, and $1 \leq i \leq N-1$; and
in the operation of determining, according to the determined identification information of the plurality of decompression sub-modules, identification information of the decompression sub-modules for decompressing each group of second channel state information, decompression sub-modules corresponding to the received sequence numbers are taken as decompression sub-modules to which each group of second channel state information is input.

24. The acquisition method according to claim 23, wherein determining, according to the identification information of the plurality of compression sub-modules, identification information of a plurality of decompression sub-modules in one-to-one correspondence with the plurality of compression sub-modules further comprises:
taking the sequence number of the decompression sub-module to which each group of second channel state information is input till the sequence number 1 as identification information of a plurality of decompression sub-modules in one-to-one correspondence with the plurality of compression sub-modules which obtain each group of second channel state information.

25. The acquisition method according to claim 23, wherein decompressing the second intermediate channel state information by the decompression sub-modules corresponding to the second channel state information with the smallest compression multiple, to obtain the target channel state information comprises:

determining a smallest one of the received sequence numbers;
determining the smallest one of the sequence numbers as a sequence number of a first decompression sub-module which decompresses the second intermediate channel state information with the smallest compression multiple; and
determining the decompression sub-modules with the smallest one of the received sequence numbers till the sequence number 1 as the decompression sub-modules for decompressing the second intermediate channel state information with the smallest compression multiple.

26. The acquisition method according to claim 22, wherein the first preset rule comprises numbering the N compression sub-modules consecutively in decrements from N to 1, and the sequence number of each compression sub-module is negatively correlated with the compression multiple of the compression sub-module, while the second preset rule comprises numbering the N decompression sub-modules consecutively in increments from 1 to N, and the sequence number of each decompression sub-module is positively correlated the expansion multiple of the decompression sub-module, and

the first preset rule and the second preset rule in correspondence comprises: a compression sub-module and a decompression sub-module with the same sequence number in correspondence;
a decompression sub-module numbered i has an expansion multiple greater than a decompression sub-module numbered i+1, where i is a variable and a positive integer, and $1 \leq i \leq N-1$; and
in the operation of determining, according to the determined identification information of the plurality of decompression sub-modules, identification information of the decompression sub-modules for decompressing each group of second channel state information, decompression sub-modules corresponding to the received sequence numbers are taken as decompression sub-modules to which each group of second channel state information is input.

27. The acquisition method according to claim 26, wherein determining, according to the identification information of the plurality of compression sub-modules, identification information of a plurality of decompression sub-modules in one-to-one correspondence with the plurality of compression sub-modules further comprises:
taking the sequence number of the decompression sub-module to which each group of second channel state information is input till the sequence number N as identification information of a plurality of decompression sub-modules in one-to-one correspondence with the plurality of compression sub-modules.

28. The acquisition method according to claim 26, wherein the identification information comprises decompressing the second intermediate channel state information by the decompression sub-modules corresponding to the second channel state information with the smallest compression multiple, to obtain the target channel state information comprises:

determining a largest one of the received sequence numbers;
determining the largest one of the sequence numbers as a sequence number of a first decompression sub-module which decompresses the second intermediate channel state information with the smallest compression multiple; and
determining the decompression sub-modules with the largest one of the received sequence numbers till the sequence number N as the decompression sub-modules for decompressing the second intermediate channel state information with the smallest compression multiple.

29. The acquisition method according to claim 16, wherein decompressing and combining the M groups of second channel state information by the plurality of decompression sub-modules respectively comprises:

decompressing each group of second channel state information by part of the plurality of decompression sub-modules, to obtain M groups of first intermediate channel state information, respectively, wherein the first intermediate channel state information has a smaller number of elements than the first channel state information;
combining the M groups of first intermediate channel state information to obtain second intermediate channel state information; and
decompressing the second intermediate channel state information by the remaining ones of the plurality of decompression sub-modules to obtain the target channel state information.

30. The acquisition method according to claim 16, wherein each decompression sub-module satisfies at least one of the following conditions:

the decompression sub-module comprises a fully-connected layer;
the decompression sub-module comprises a plurality of de-convolutional layers, each convolutional layer comprising at least one of: an up-sampling layer, an up-pooling layer, a transposed convolutional layer, a residual block, a dense block or a direct layer; or
the decompression sub-module comprises a recurrent neural network comprising a long short term memory (LSTM) or a gated recurrent unit (GRU).

31. The acquisition method according to claim 16, wherein the decoder further comprises a second processing module, and the acquisition method further comprises:

processing the target channel state information by the second processing module to extract channel state information fed back by a terminal.

32. The acquisition method according to claim 31, wherein the second processing module satisfies any one of the following conditions:

the second processing module comprises a fully-connected network comprising at least two fully-connected layers;
the second processing module comprises a convolutional network comprising at least one of: at least one convolutional layer, at least one residual block, at least one dense block, at least one pooling layer, or at least one direct layer; or
the second processing module comprises a recurrent neural network comprising a long short term memory (LSTM) or a gated recurrent unit (GRU).

33. The acquisition method according to any one of claims 15 to 32, wherein the acquisition method further comprises:

receiving information on a length of a feedback period of each group of second channel state information, wherein the feedback period of the second channel state information is negatively correlated with a data amount of the second channel state information; and
in the operation of decompressing and combining the respective groups of second channel state information, with the second channel state information of a longer feedback period, combining the second channel state information of shorter feedback periods throughout the longer feedback period.

34. The acquisition method according to claim 33, wherein the acquisition method further comprises:
determining, according to the received information on the length of the feedback period of each group of second channel state information, an expansion multiple for decompressing the group of second channel state information.

35. The acquisition method according to any one of claims 15 to 32, wherein the acquisition method further comprises:

receiving information on the compression multiple corresponding to each group of second channel state information; and
determining the expansion multiple of each group of second channel state information according to the information on the compression multiple corresponding to each group of second channel state information.

36. A method for joint training of an encoder and a decoder, wherein the encoder is capable of performing compression with N compression multiples, the decoder is capable of performing decompression with N expansion multiples, and values of the N compression multiples are equal to values of the N decompression expansion multiples one by one, and the method comprises:

training initial parameters of the encoder to obtain final parameters of the encoder; and
training initial parameters of the decoder to obtain final parameters of the decoder; wherein
a training error in the operation of training initial parameters of the encoder, and a training error in the operation of training initial parameters of the decoder, are each an error function between an input of the encoder and an output of the decoder.

37. The method according to claim 36, wherein the encoder comprises N compression sub-modules, which are capable of implementing compression with N compression multiples, respectively, the initial parameters of the encoder comprise initial parameters of the N compression sub-modules, and the final parameters of the encoder comprise final parameters of the N compression sub-modules;

the decoder comprises N decompression sub-modules, which are capable of implementing decompression with N expansion multiples, respectively, the initial parameters of the decoder comprise initial parameters of the N decompression sub-modules, and the final parameters of the decoder comprise final parameters of the N decompression sub-modules;
training initial parameters of the encoder comprises training the initial parameters of the N compression sub-modules, respectively; and
training initial parameters of the decoder comprises training the initial parameters of the N decompression sub-modules, respectively.

38. The method according to claim 37, wherein a training error in training the initial parameters of a compression sub-module is an error function between an input of the compression sub-module and an output of the decompression sub-module having an expansion multiple value the same as a compression multiple value of the compression sub-module.

39. The method according to claim 37, wherein the error function satisfies:

$$\text{Loss} = \sum_{i=1}^{N} k_i \text{Loss}_i \ ;$$

where Loss is the error;

i is the sequence number of the compression sub-module and the decompression sub-module;
ki is a weighting coefficient of the $i^{th}$ compression sub-module and the $i^{th}$ decompression sub-module; and

$$\sum_{i=1}^{N} k_i = 1 \ .$$

40. The method according to any one of claims 36 to 39, wherein the error function is selected from any one of: a mean square error function, an absolute loss function, or a logarithmic loss function.

41. A terminal, comprising:

    a first storage module having a first executable program stored thereon; and
    at least one first processor which invokes the first executable program to implement the feedback method according to any one of claims 1 to 14.

42. A base station, comprising:

    a second storage module having a second executable program stored thereon; and
    at least one second processor which invokes the second executable program to implement the acquisition method according to any one of claims 15 to 35.

43. An electronic device, comprising:

    a third storage module having a third executable program stored thereon; and
    at least one third processor which invokes the third executable program to implement the method for joint training according to any one of claims 36 to 40.

44. A computer-readable medium having an executable program stored thereon which, when invoked, causes the method according to any one of claims 1 to 40 to be implemented.

Compress first channel state information with M compression multiples by an encoder, to obtain M groups of second channel state information

S110

Feed back the M groups of second channel state information

S120

FIG. 1

FIG. 2

FIG. 3

FIG. 4

Compress first channel state information with M compression multiples by an encoder, to obtain M groups of second channel state information

S110

Feed back the M groups of second channel state information

S120

Feed back identification information of compression sub-modules for achieving each of the compression multiples; or feed back identification information of one or more of the plurality of compression sub-modules, which satisfy a preset condition, for achieving each of the compression multiple

S130

FIG. 5

Acquire original channel information

S101

Perform feature extraction on the original channel information by the encoder to obtain initial channel state information

S102

Pre-process the initial channel state information to obtain the first channel state information

S103

Compress first channel state information with M compression multiples by an encoder, to obtain M groups of second channel state information

S110

Feed back the M groups of second channel state information

S120

Feed back identification information of compression sub-modules for achieving each of the compression multiples; or feed back identification information of one or more of the plurality of compression sub-modules, which satisfy a preset condition, for achieving each of the compression multiple

S130

Feed back the length of the feedback period for each group of second channel state information

S140

FIG. 6

Receive M groups of second channel state information, where each group of the received second channel state information is information obtained by compressing the first channel state information with a corresponding multiple by an encoder

S210

Decompress and combine the respective groups of second channel state information by a decoder to obtain the target channel state information.

S220

FIG. 7

Decompression sub-module N

Decompression sub-module N-1

Decompression sub-module M

Decompression sub-module 1

FIG. 8

Determine a plurality of the N decompression sub-modules corresponding to the M groups of second channel state information

S221

Decompress and combine the M groups of second channel state information by the plurality of decompression sub-modules respectively to obtain the target channel state information

S222

FIG. 9

Receive identification information of M compression sub-modules

S201

Receive M groups of second channel state information, where each group of the received second channel state information is information obtained by compressing the first channel state information with a corresponding multiple by an encoder

S210

Determine a plurality of the N decompression sub-modules corresponding to the M groups of second channel state information

S221

Decompress and combine the M groups of second channel state information by the plurality of decompression sub-modules respectively to obtain the target channel state information

S220

S222

FIG. 10

FIG. 11

Take a decompression sub-module corresponding to the received sequence number as a decompression sub-module to which each group of second channel state information is input

S221a

Take the sequence number of the decompression sub-module to which each group of second channel state information is input till the sequence number 1 as identification information of a plurality of decompression sub-modules in one-to-one correspondence with the plurality of compression sub-modules which obtain each group of second channel state information

S221b

FIG. 12

Receive identification information of a plurality of compression sub-modules

S201

Receive M groups of second channel state information, where each group of the received second channel state information is information obtained by compressing the first channel state information with a corresponding multiple by an encoder

S210

Determine a plurality of the N decompression sub-modules corresponding to the M groups of second channel state information

S221

Decompress and combine the M groups of second channel state information by the plurality of decompression sub-modules respectively to obtain the target channel state information

S220

S222

Process the target channel state information by the second processing module to extract channel state information fed back by a terminal

S230

FIG. 13

Train initial parameters of the encoder to obtain final parameters of the encoder

S310

Train initial parameters of the decoder to obtain final parameters of the decoder

S320

FIG. 14

**Loss₁**

$CSI_1$ → Compression sub-module 1 ($\gamma_1$) → Feedback → Decompression sub-module 1 → $\hat{CSI}_1$

**Loss₂**

$CSI_2$ → Compression sub-module 2 ($\gamma_2$) → Feedback → Decompression sub-module 2 → $\hat{CSI}_2$

$Loss = F(CSI, \hat{CSI})$

•
•
•

**LossN**

$CSI_N$ → Compression sub-module N ($\gamma_N$) → Feedback → Decompression sub-module N → $\hat{CSI}_N$

FIG. 15

## INTERNATIONAL SEARCH REPORT

| | International application No. |
|---|---|
| | **PCT/CN2022/138160** |

**A. CLASSIFICATION OF SUBJECT MATTER**

H04B 7/06(2006.01)i

According to International Patent Classification (IPC) or to both national classification and IPC

**B. FIELDS SEARCHED**

Minimum documentation searched (classification system followed by classification symbols)

IPC: H04B H04L H04W

Documentation searched other than minimum documentation to the extent that such documents are included in the fields searched

Electronic data base consulted during the international search (name of data base and, where practicable, search terms used)

CNTXT; CNKI; CJFD; ENTXTC; ENTXT; DWPI; 3GPP: 信道状态信息, 反馈, 压缩, 编码, 解码, 倍数, 倍率, 压缩率, 两个, 多个, 串联, 并联, 标识, 编号, 序号, CSI, feedback, compression, encoding, decoding, multi+, rate, two, series, parallel, identification, number, sequence number

**C. DOCUMENTS CONSIDERED TO BE RELEVANT**

| Category* | Citation of document, with indication, where appropriate, of the relevant passages | Relevant to claim No. |
|---|---|---|
| X | CN 110350958 A (SOUTHEAST UNIVERSITY) 18 October 2019 (2019-10-18) description, paragraphs 35-76 | 1-4, 8-13, 36-41, 43, 44 |
| A | CN 111416642 A (INDUSTRIAL TECHNOLOGY RESEARCH INSTITUTE) 14 July 2020 (2020-07-14) entire document | 1-44 |
| A | US 2015036529 A1 (HUAWEI TECHNOLOGIES CO., LTD.) 05 February 2015 (2015-02-05) paragraphs 144-152 | 1-44 |
| A | 廖勇 等 (LIAO, Yong et al.). "一种基于深度学习的FDD大规模MIMO系统CSI反馈方法 (CSI Feedback Method Based on Deep Learning for FDD Massive MIMO Systems)" 电子学报 (Acta Electronica Sinica), No. 06, 15 June 2020 (2020-06-15), pp. 144-151 | 1-44 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 February 2023** | **17 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/138160**

| Patent document cited in search report | | | Publication date (day/month/year) | Patent family member(s) | | | Publication date (day/month/year) |
|---|---|---|---|---|---|---|---|
| CN | 110350958 | A | 18 October 2019 | None | | | |
| CN | 111416642 | A | 14 July 2020 | None | | | |
| US | 2015036529 | A1 | 05 February 2015 | WO | 2013155903 | A1 | 24 October 2013 |
| | | | | US | 9900073 | B2 | 20 February 2018 |
| | | | | EP | 2840731 | A1 | 25 February 2015 |
| | | | | EP | 2840731 | A4 | 17 June 2015 |
| | | | | EP | 2840731 | B1 | 25 May 2016 |

Form PCT/ISA/210 (patent family annex) (July 2022)

**REFERENCES CITED IN THE DESCRIPTION**

**Patent documents cited in the description**

- CN 202111505026